# EUROPEAN PATENT SPECIFICATION

(11) **EP 3 101 958 B1**
(45) Date of publication and mention of the grant of the patent: **06.11.2019**
(21) Application number: 16172003.2
(22) Date of filing: 30.05.2016
(51) Int. Cl.: H04W 52/02, H04M 1/725, G06F 3/0488, G06F 1/32

(54) **MOBILE TERMINAL AND METHOD FOR CONTROLLING THE SAME**
TRAGBARES ENDGERÄT UND VERFAHREN ZUR STEUERUNG DAVON
TERMINAL MOBILE ET SON PROCÉDÉ DE COMMANDE

(30) Priority: 05.06.2015 KR 20150080143
(43) Date of publication of application: 07.12.2016
(73) Proprietor: LG ELECTRONICS INC., Yeongdeungpo-gu Seoul 07336 (KR)
(72) Inventor: TAE, Kyongpil, Seoul 06772 (KR); KIM, June, Seoul 06772 (KR); HA, Jeunguk, Seoul 137-893 (KR); JANG, Byul, Seoul 06772 (KR)
(74) Representative: Plasseraud IP

(56) References cited:
- WO-A1-2014/132824
- WO-A1-2015/014115
- US-A1- 2011 159 931
- US-A1- 2013 332 589
- US-A1- 2014 235 228
- US-A1- 2014 293 848

## Description

### BACKGROUND OF THE INVENTION

### 1. Field of the Invention

The present invention relates to a mobile terminal, and more particularly, to a mobile terminal capable of enhancing power efficiency by controlling current consumption in a standby state, and a method for controlling the same.

### 2. Background of the Invention

Terminals can be generally classified as mobile/portable terminals or stationary terminals. Mobile terminals can also be classified as handheld terminals or vehicle mounted terminals. Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As the mobile terminal becomes smaller and lighter for an enhanced mobility, a battery provided at the mobile terminal also becomes smaller and lighter. However, as the battery becomes smaller and lighter, it has a limited capacity. Accordingly, there is a need to use the limited capacity of the battery more efficiently.

Recently, a method for terminating an application being executed on a background has been developed such that the capacity of the battery is controlled more efficiently. However, the related art method has a disadvantage to periodically re-terminate the application which has been set to be automatically re-executed on the background. Examples and possible embodiments of the prior art may be found in US 2014/235228 A1, US 2014/293848 A1, US 2013/332589 A1. More in particular, in US 2014/2355228, a mobile telephone includes a communication module, and a control module configured to perform background communication with respect to an application via the communication module. The control module restricts background communication, based on an activation history of the application in foreground. The control module includes a determination module configured to determine whether background communication is unnecessary based on the activation history of the application in foreground with respect to each of the applications, and a setting switching module configured to switch communication setting of the application, of which background communication is determined to be unnecessary, from a first setting of permitting the background communication to a second setting of restricting the background communication.

### SUMMARY OF THE INVENTION

Therefore, an aspect of the detailed description is to provide a method for controlling applications executed on a background.

Another aspect of the detailed description is to provide a method for intuitively controlling execution of an application on a background.

In still another aspect, the present invention provides a method for reducing a standby current of a mobile terminal by controlling an execution state of an application on a background, even in an immortal service of the application executed on the background, for an efficient control of a limited capacity of a battery.

To achieve these and other advantages and in accordance with the purpose of this specification, as embodied and broadly described herein, there is provided a mobile terminal according to claim 1.

To achieve these and other advantages and in accordance with the purpose of this specification, as embodied and broadly described herein, there is also provided a method according to claim 13.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a block diagram illustrating components of a mobile terminal according to an embodiment of the present invention;
FIGS. 2A and 2B are conceptual views illustrating states of applications in a general mode and in a power saving mode, in a mobile terminal according to an embodiment of the present invention;
FIGS. 2C and 2D are conceptual views illustrating a method for restricting execution of functions related to applications, in a background deactivated state of the applications;
FIG. 3 is a flowchart illustrating a method for controlling a background activated state of an application in a power saving mode, in a mobile terminal according to an embodiment of the present invention;
FIGS. 4A to 4E are conceptual views illustrating a method for executing a power saving mode in a mobile terminal according to an embodiment of the present invention;
FIGS. 5A and 5B are conceptual views illustrating the control method of FIG. 3;
FIGS. 6A and 6B are conceptual views illustrating a method for selecting an application to be set to be in a background activated state in a power saving mode, in a mobile terminal according to an embodiment of the present invention;
FIGS. 7A and 7B are conceptual views illustrating a method for setting an application to be executed in a background deactivated state in a power saving mode, according to a preset condition;
FIGS. 8A and 8B are conceptual views illustrating a method for displaying a background execution state of an application in a power saving mode;
FIGS. 9A to 9E are conceptual views illustrating a method for providing a home screen page in a power saving mode; and
FIGS. 10A to 10C are conceptual views illustrating a method for executing applications in a power saving mode.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

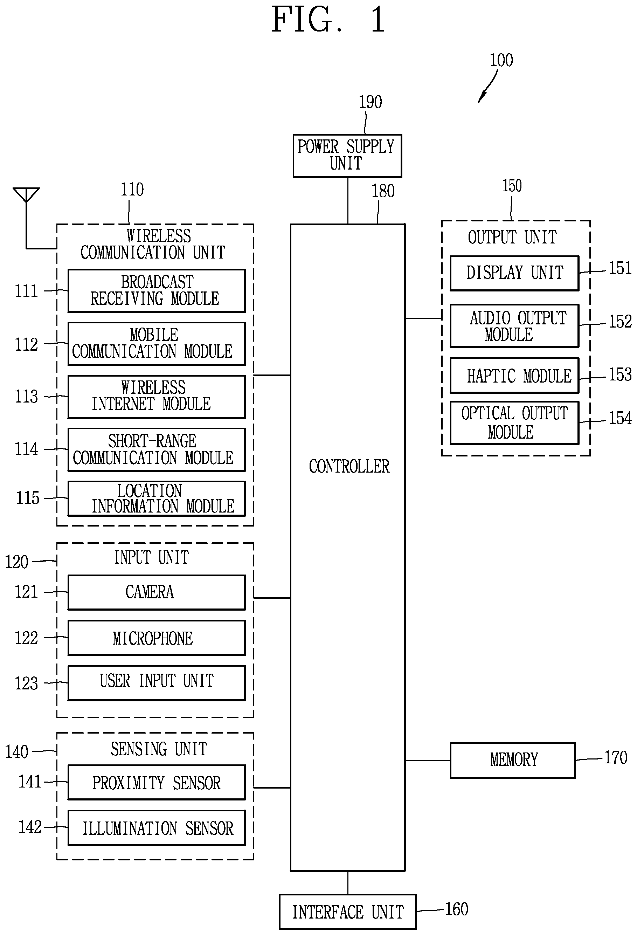

Reference is now made to FIG. 1, which is a block diagram of a mobile terminal in accordance with the present disclosure. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions corresponding to a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations corresponding to the application programs. The controller 180 can provide or process information or functions appropriate for a user by processing signals, data, information and the like, which are input or output by the aforementioned various components, or activating application programs stored in the memory 170. Further, the controller 180 can control at least one of the aforementioned components in FIG. 1, so as to drive the application programs stored in the memory 170. Also, the controller 180 can operate at least two of the components of the mobile terminal 100 in a combined manner.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method of a mobile terminal according to various embodiments to be explained later. The operation or the control method of the mobile terminal may be implemented on the mobile terminal by driving at least one application program stored in the memory 170.

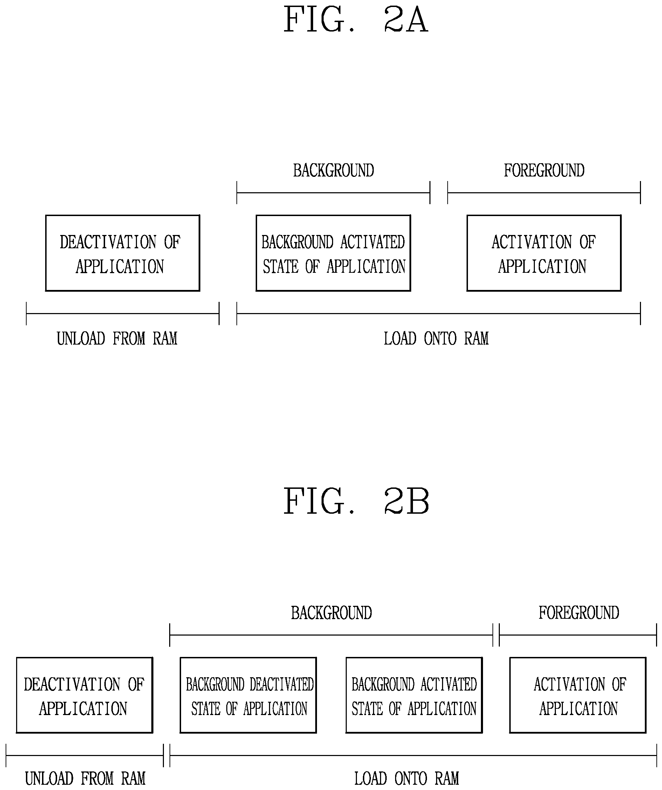

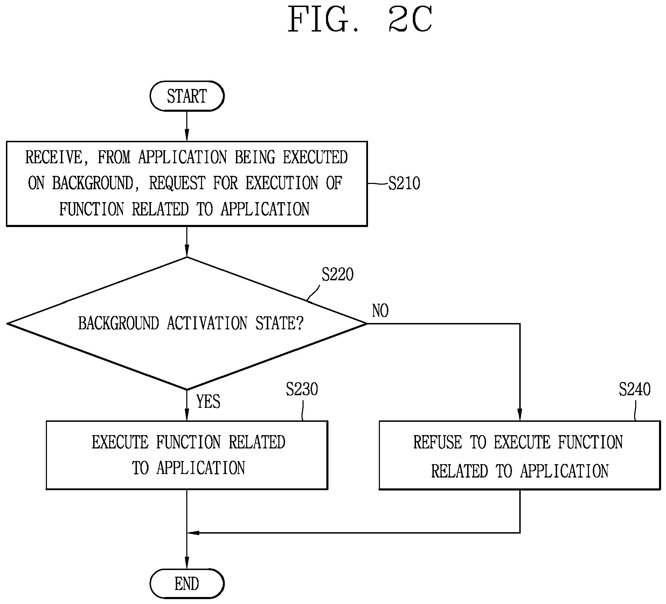

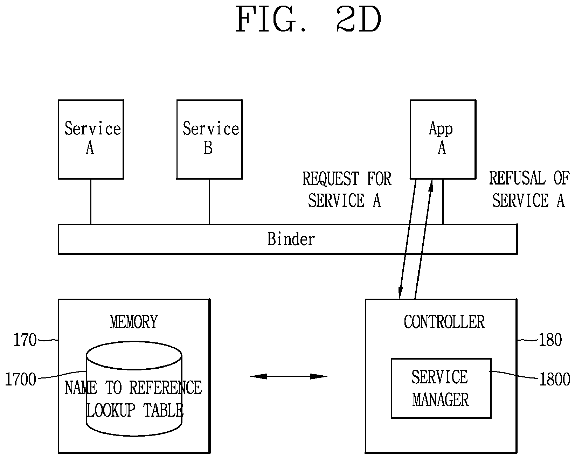

Hereinafter, a method for controlling the mobile terminal will be explained in more detail with reference to the attached drawings. The drawings will be sequentially explained based on the left upper drawing, in a clockwise direction. In particular, FIGS. 2A and 2B are conceptual views illustrating states of applications in a general mode and in a power saving mode, in a mobile terminal according to an embodiment of the present invention, and FIGS. 2C and 2D are conceptual views illustrating a method for restricting execution of functions related to applications, in a background deactivated state of the applications.

The mobile terminal of the present invention may be executed in either a general mode or a power saving mode. The general mode corresponds to a state of the mobile terminal where an application being executed in a background among one or more applications installed on the mobile terminal is not additionally controlled, in the same manner as the related mobile terminal.

More specifically, as shown in FIG. 2A, when the mobile terminal is executed in the general mode, the controller 180 can control an application to be in one of a deactivated state, an activated state and a background activated state. The deactivated state corresponds to an unloaded state of an application from the memory 170. The memory 170 may be a random access memory (RAM).

In the deactivated state of the application, the application is not executed on a background and a foreground, and execution of a function related to the application is restricted. For instance, when a message application is deactivated, the mobile terminal cannot receive a message from an external server or an external mobile terminal through a network communication, since execution of the network communication is restricted. That is, in an embodiment of the present invention, when the message application is deactivated, the mobile terminal cannot receive a message from an external server or an external mobile terminal through a network communication, in an unloaded state from the memory 170.

The context that the application is executed on the foreground corresponds to that an execution screen of the application is displayed on the display unit 151 as the application is executed. The context that the application is executed on the background corresponds to that the application is loaded onto the memory 170, but is not executed on a foreground yet. In this instance, the application is in a standby state for execution on the foreground.

The activated state of the application corresponds to a loaded state of the application into the memory 170, and an executed state of the application on the foreground. In this instance, the controller 180 can display an execution screen of the application on the display unit 151. The application may be executed on the background or the foreground. More specifically, the application may be executed on the background or the foreground according to a user's selection.

That is, when a request for execution of an application on the foreground is received, the controller 180 can execute the application on the foreground. For instance, the controller 180 can execute the application on the foreground, in response to a touch input applied to a graphic object corresponding to the application.

If a request for displaying another screen rather than an execution screen of the application is received while the application is being executed on the foreground, the controller 180 can terminate the execution of the application on the foreground, and execute the application on the background. The request for displaying another screen rather than an execution screen of the application may be a request for displaying a home screen page, or a request for displaying an execution screen of another application.

For instance, when the execution screen of the application has been displayed on the display unit 151 by execution of the application on the foreground, if a user's request for displaying a home screen page is received, the controller 180 can display the home screen page on the display unit 151. The controller 180 can terminate the execution of the application on the foreground, and may execute the application on the background.

The controller 180 can automatically execute the application on the background without a user's request, based on setting information of the application. The setting information of the application may be information set by a program developer of the application such that the application is automatically executed on the background when driven by the program developer. In this instance, even if the application is forcibly ended according to a user's request, if a predetermined time lapses, the controller 180 can automatically load the application onto the memory 170 to execute the application on the background. Such a setting is called an immortal service, a zombie service, etc.

The immortal service may be used when continuous execution of the application on the background is necessary, without a user's request. For instance, a message application may use the immortal service, since the background should be always executed to receive a message in real time from an external server or an external terminal. The application using the immortal service may be automatically re-executed on the background when a predetermined time lapses, even if the application has been forcibly ended by a user (i.e., even if the application has been unloaded from the memory 170 after the execution of the application on the background). In this instance, even if the application using the immortal service is being executed on the background, a user of the mobile terminal cannot recognize the execution state.

The background activated state corresponds to when an application loaded onto the memory 170 is not executed on the foreground. That is, the background activated state corresponds to when an application is being executed on the background for rapid execution of the application. Also, the background activated state corresponds to a standby state to wait for execution of an application on the foreground.

In this instance, the controller 180 can directly execute an application on the foreground, without loading the application from the memory 170, since the application is in the background activated state. That is, the controller 180 can directly convert a state of the application to an activated state from the background activated state, without loading the application onto the memory 170. In this instance, the controller 180 can execute the application being executed on the background, on the foreground, more rapidly than an application which is in a deactivated state.

Further, since the application being executed on the background is in a loaded state onto the memory 170, a request for execution of a function related to the application may be generated by the application. If the application is being executed on the background (i.e., if the application is in a background activated state), the controller 180 can execute a function related to the application, based on the request. For instance, when a message application is in a background activated state, the mobile terminal can receive a message from an external server or an external terminal through network communication. Thus, a user of the mobile terminal can check in real time a message received from the external server or the external terminal.

When the application is in the background activated state, the controller 180 can not display an execution screen of the application on the display unit 151. That is, since the background activated state of the application indicates a state of the application prior to execution, the execution screen of the application can not be displayed on the display unit 151.

The power saving mode corresponds to a state of the mobile terminal where an application being executed on the background is controlled, among one or more applications installed on the mobile terminal. More specifically, the power saving mode corresponds to a state of the mobile terminal where execution of a function related to an application being executed on the background is restricted.

That is, the power saving mode corresponds to a state of the mobile terminal where consumption of a standby current is reduced as execution of an application on the background is controlled. The standby current may be a current consumed in a standby state where a specific application is not executed on the foreground. That is, the standby current corresponds to a minimum current required to drive the mobile terminal (i.e., required to maintain a power of the mobile terminal), and a current consumed by an application being executed on the background of the mobile terminal.

In the power saving mode, an application may be set to be in one of a deactivated state, an activated state, a background activated state, and a background deactivated state. In the power saving mode, an application to be set to be in a background deactivated state may be applicable to all applications installed on the mobile terminal. Explanations about the deactivated state, the activated state, and the background activated state will be replaced by the aforementioned explanations.

In a different manner from the aforementioned general mode, in the power saving mode, an application executed on the background may be set to be in either a background activated state or a background deactivated state. That is, in the power saving mode, if an application is being executed on the background, the controller 180 can control the application to be in either a background activated state or a background deactivated state.

Like the background activated state, the background deactivated state correspond to when an application loaded onto the memory 170 has not been executed on the foreground, i.e., a standby state to wait for execution on the foreground. However, the background deactivated state is different from the background activated state as follows. In the background deactivated state, even if a request is generated from an application being executed on the background, execution of a function related to the application is restricted.

For instance, when a message application is in a background deactivated state, even if a request for execution of network communication is received from the message application, the controller 180 can not execute the network communication. The controller 180 can restrict reception of a message from an external server or an external terminal through the network communication. That is, a user of the mobile terminal does not receive a message when the message application is in the background deactivated state.

In the power saving mode, the background deactivated state and the background activated state are not related to whether an application is being executed on the background or not. That is, setting an application in the background deactivated state in the power saving mode corresponds to that an application to be executed on the background is controlled in the background deactivated state.

In an embodiment of the present invention, setting an application in the background deactivated state in the power saving mode does not mean execution of the application on the background. Likewise, setting an application in the background activated state corresponds to that an application executed on the background is controlled in the background activated state. That is, in the power saving mode, setting an application in the background activated state does not mean execution of the application on the background.

Hereinafter, a method for restricting execution of a function related to an application, when the application is being executed on the background in the background deactivated state, will be explained in more detail. Referring to FIG. 2C, the controller 180 can receive a request for execution of a function related to an application, from the application being executed on the background (S210).

The application being executed on the background has been loaded onto the memory 170, and generates a request for execution of a function related to thereto. On the contrary, when the application is in a deactivated state, i.e., when the application has not been loaded to the memory 170, the application cannot generate a request for execution of a function related thereto. An application being executed on the foreground generates a request for execution of a function related to the application, and may execute the application. That is, the control method according to an embodiment of the present invention is not applicable to an application which is in a deactivated state, or an application which is being executed on the foreground in an activated state.

Once a request for execution of a function related to the application is received, the controller 180 can determine whether the application is in a background activated state or not (S220). When the application is in a background activated state (Yes in S220), the controller 180 can execute a function related to the application (S230). If the application is in a background activated state, the controller 180 can transmit a request for execution of a function related to the application, to the function related to the application, such that the function related to the application is executed. In this instance, the controller 180 can execute the function related to the application on the background.

That is, the controller 180 can load the function related to the application from the memory 170, and execute the function related to the application on the background. In this instance, the function related to the application may be a function to perform data communication with the application. For instance, when the application is a message application and a function related to the application is a network function, if a request for execution of the network function is received from the message application, the controller 180 can transmit the request to the network function such that the network function is executed. Further, if a control command is transmitted from the network function, the controller 180 can transmit the control command to the message application.

Upon completion of the execution of the function related to the application, the controller 180 can terminate the execution of the function related to the application, or control the function to be continuously executed on the background. That is, when the execution of the function related to the application is completed, the controller 180 can unload the function related to the application from the memory 170, or control the function to be continuously executed on the background so as to wait for execution on the foreground.

On the contrary, if the application is in a background deactivated state, the controller 180 restricts execution of the function related to the application, thereby refusing the execution of the function related to the application (S240). If it is determined that the application is in a background deactivated state, the controller 180 can not transmit a request for execution of the function related to the application, to the function related to the application, such that the function related to the application is not executed. That is, in an embodiment of the present invention, the application does not perform data communication with the function related to the application.

More specifically, referring to FIG. 2D, while an application (app A) is being executed on the background in a background deactivated state, the controller 180 can receive a request for execution of a function (service A) related to the application. In this instance, the controller 180 can not transmit a request for execution of the function (service A) related to the application, to the function (service A) related to the application, such that the function (service A) related to the application is not executed. The controller 180 can further include a service manager 1800 configured to determine whether to execute the function related to the application in a background execution state of an application. Hereinafter, it is assumed that the controller 180 controls an application being executed on the background. However, the service manager 1800, not the controller 180, controls an application being executed on the background.

The function (service A) related to the application may be a function executed together with a function provided by an application when the application is in a background activated state. For instance, when the application is a message application, the function related to the application may be a network communication function, a notification function, a timer function, etc. As another example, when the application is a web-based game application, the function related to the application may be a network communication function, an SNS function, a message application, etc.

The function related to the application may be pre-stored in the memory 170. For instance, the memory 170 may further include a lookup table 1700 to store therein functions related to applications which are restricted from being executed, in a background deactivated state. The lookup table 1700 may store therein mapping information between applications and functions related to the applications, the functions restricted from being executed in a background deactivated state of the applications.

The controller 180 can determine whether to transmit a request for execution of a function (service A) related to an application (app A), to the function (service A) related to the application, based on the information stored in the lookup table 1700. The controller 180 can not transmit a request for execution of the function (service A) related to the application, to the function (service A) when the application is stored in the lookup table 1700.

That is, in an embodiment of the present invention, when an application is in a background deactivated state, a request for execution of a function related to the application is not transmitted to the function related to the application. Communication between the application and the function related to the application may be controlled such that the function related to the application is not executed.

When a request for execution of the function (service A) related to the application (app A) is not transmitted, the controller 180 can transmit, to the application, a feedback signal indicating that execution of the function related to the application has been restricted. Unlike an application deactivated state, the background deactivated state is when an application has been loaded to the memory 170. Thus, in the background deactivated state, the application can be rapidly executed.

More specifically, when an application is in a background deactivated state, the controller 180 can directly execute the application, without loading the application into the memory 170, in response to reception of a request for execution of the application. On the contrary, when an application is in a deactivated state, the controller 180 can execute the application after loading the application from the memory 170, in response to reception of a request for execution of the application.

That is, in an embodiment of the present invention, a standby current can be reduced by restricting execution of additional functions on the background, while a loaded state of an application into the memory 170 is maintained. Further, in an embodiment of the present invention, since a loaded state of an application into the memory 170 is maintained, the application is directly executed on the foreground, without being loaded from the memory 170. This can reduce current consumption occurring for loading of the application from the memory 170.

The above description describes an executed state of an application in a general mode and a power saving mode, and a method for controlling an application in a deactivated state. Hereinafter, a method for controlling an executed state of an application in a power saving mode will be explained in more detail.

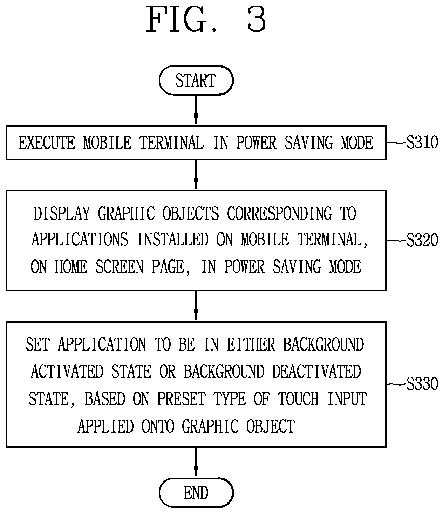

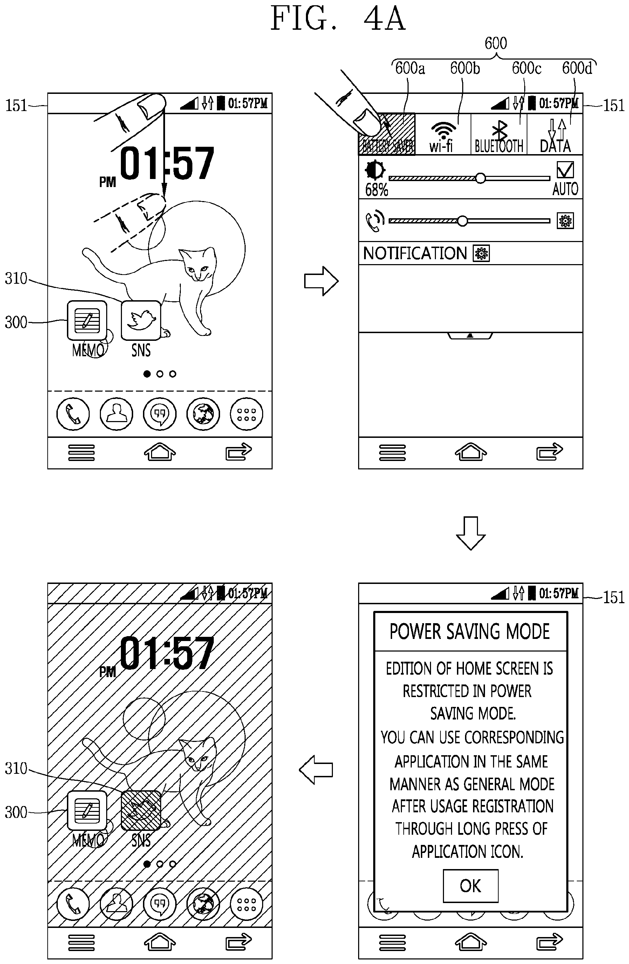

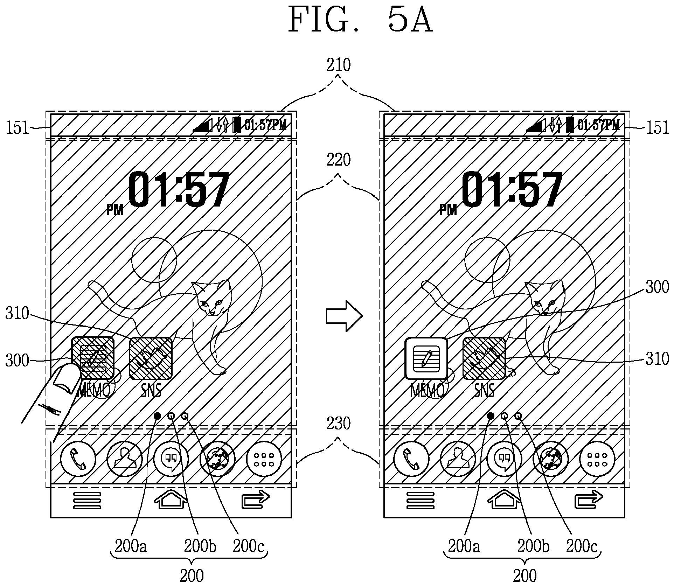

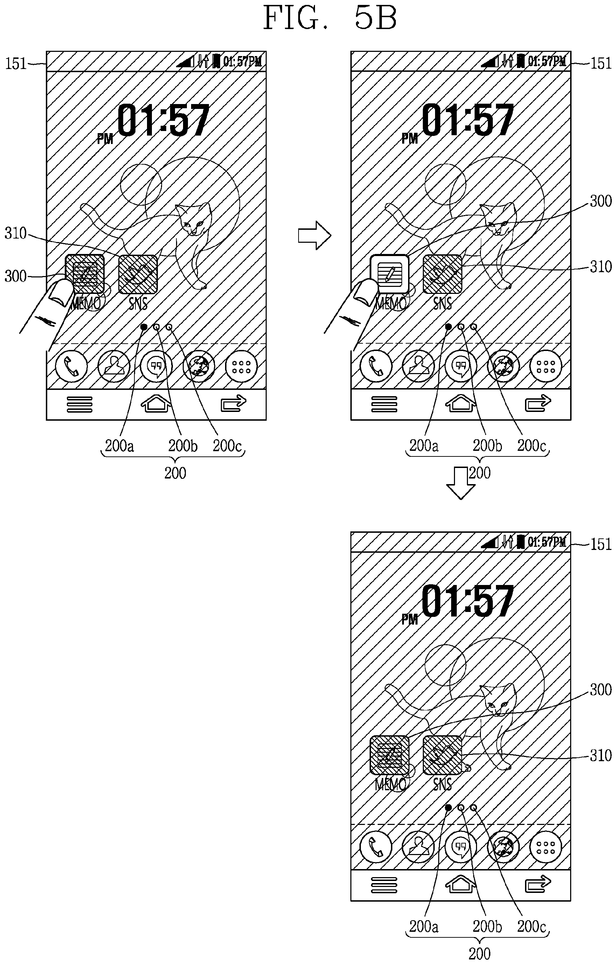

FIG. 3 is a flowchart illustrating a method for controlling a background activated state of an application in a power saving mode in a mobile terminal according to an embodiment of the present invention, FIGS. 4A to 4E are conceptual views illustrating a method for executing a power saving mode in a mobile terminal according to an embodiment of the present invention, and FIGS. 5A and 5B are conceptual views illustrating the control method of FIG. 3.

Firstly, the mobile terminal according to an embodiment of the present invention executes a power saving mode (S310). The controller 180 of the mobile terminal can execute a power saving mode while a general mode is being executed, based on a user's selection or a preset condition. That is, the mobile terminal of the present invention can be operated in a general mode, unless an additional control is performed.

The mobile terminal can execute a power saving mode based on a user's selection or a preset condition. When the mobile terminal executes a power saving mode based on a user's selection, the controller 180 can receive a request for execution of a power saving mode, from a user.

For instance, as shown in FIG. 4A, the request for execution of a power saving mode may be received through a state display window. The state display window may be a page for displaying state information of the mobile terminal on the display unit 151. The state information of the mobile terminal includes information related to an operation of the mobile terminal, such as a brightness of the display unit 151, notification information generated from at least one application installed on the mobile terminal, a network state of the mobile terminal, and a sensor state of the mobile terminal.

The state display window may be displayed on the display unit 151 when a preset type of touch is applied onto a specific position of the display unit 151. For instance, as shown in a first drawing of FIG. 4A, the controller 180 can display the state display window, based on a drag input starting from one end of the display unit 151.

The state display window may further include a graphic object 600 for converting an operation state of the mobile terminal. For instance, as shown in a second drawing of FIG. 4A, the state display window may further include a graphic object 600a related to execution of a power saving mode, a graphic object 600b related to a state conversion of a network of the mobile terminal, a graphic object 600c related to a state conversion of short-range communication, and a graphic object 600d related to a state conversion of LTE communication.

The controller 180 can execute a power saving mode when the graphic object 600a related to execution of a power saving mode is touched. As shown in a third drawing of FIG. 4A, the controller 180 can display information about the power saving mode on the display unit 151, such that a user recognizes functions in the power saving mode.

Once the power saving mode is executed, the controller 180 can set the remaining applications to be in a background deactivated state, the remaining applications except for one or more applications set to be in a background activated state among a plurality of applications installed on the mobile terminal.

Applications to be executed in a background activated state in a power saving mode may be selected by a user, from the plurality of applications installed on the mobile terminal. For instance, the controller 180 can set a phone application for transceiving (transmitting and receiving) a call signal, a message application for transceiving a message, and a memo application, to be in a background activated state.

In the power saving mode, a function which should be executed on the background of the mobile terminal (e.g., a phone function for transceiving a call signal, etc.) may be always set to be in a background activated state. In this instance, the function which should be executed on the background of the mobile terminal may be restricted from being set to be in a background deactivated state.

Once the power saving mode is executed, the controller 180 can provide the same home screen page as in a general mode. That is, in an embodiment of the present invention, applications executable in a power saving mode are not restricted, but only a background execution state is controlled. Thus, the same home screen page as in a general mode may be provided. In an embodiment of the present invention, since the same home screen page is provided in a general mode and a power saving mode, a user can provide the power saving mode without additionally setting a home screen page related to the power saving mode.

Further, in an embodiment of the present invention, a user can access all functions installed on the mobile terminal even in a power saving mode. That is, a user can execute all applications installed on the mobile terminal, even in a power saving mode. For instance, the controller 180 can execute an application set to be in a background deactivated state, in response to reception of a request for execution of the application set to be in a background deactivated state.

The controller 180 can change an appearance of a graphic object included in the home screen page, according to a background activation state. For instance, as shown in a fourth drawing of FIG. 4A, the controller 180 can output a graphic object 300 corresponding to a memo application which is in a background activated state, and a graphic object 310 corresponding to an SNS application which is in a background deactivated state, with different brightness, such that the graphic objects 300, 310 are distinguished from each other in a visual manner. Thus, a user can intuitively recognize an application which is in a background deactivated state, and an application which is in a background activated state.

As another example, the controller 180 can execute a power saving mode by using a function to change setting of the mobile terminal. The function to change setting of the mobile terminal may be replaced by various terms such as 'environment setting ' and 'setting'. The function to change setting of the mobile terminal may be a function to change setting related to an operation of the mobile terminal, such as a communication connection state, an output state, and an input state of the mobile terminal. In this instance, a user can execute a power saving mode by executing the function to change setting of the mobile terminal.

If the power saving mode is executed based on a preset condition, the controller 180 can execute the power saving mode based on the preset condition, or output notification information for execution of a power saving mode. The preset condition may be directly set by a user, or may be set when the mobile terminal is presented on the market. The preset condition may be one of a condition related to a position of the mobile terminal, a condition related to a time, a condition related to a remaining amount of a battery, and a condition related to a usage pattern of an application. Alternatively, the preset condition may be a condition implemented as at least two of the condition related to a time, the condition related to a remaining amount of a battery, and the condition related to a usage pattern of an application are combined with each other.

More specifically, the condition related to a position of the mobile terminal may be a condition that a current position of the mobile terminal corresponds to a specific position, a condition that a current position of the mobile terminal corresponds to a position rather than a pre-stored position, or a condition related to a path of the mobile terminal. The condition related to a time may be a condition that a current time corresponds to a preset time period. The condition related to a remaining amount of a battery may be a condition that a present remaining amount of a battery is less than a preset amount. The condition related to a usage pattern of an application may be a condition related to an execution frequency of an application, a frequent execution time, an executed state, etc.

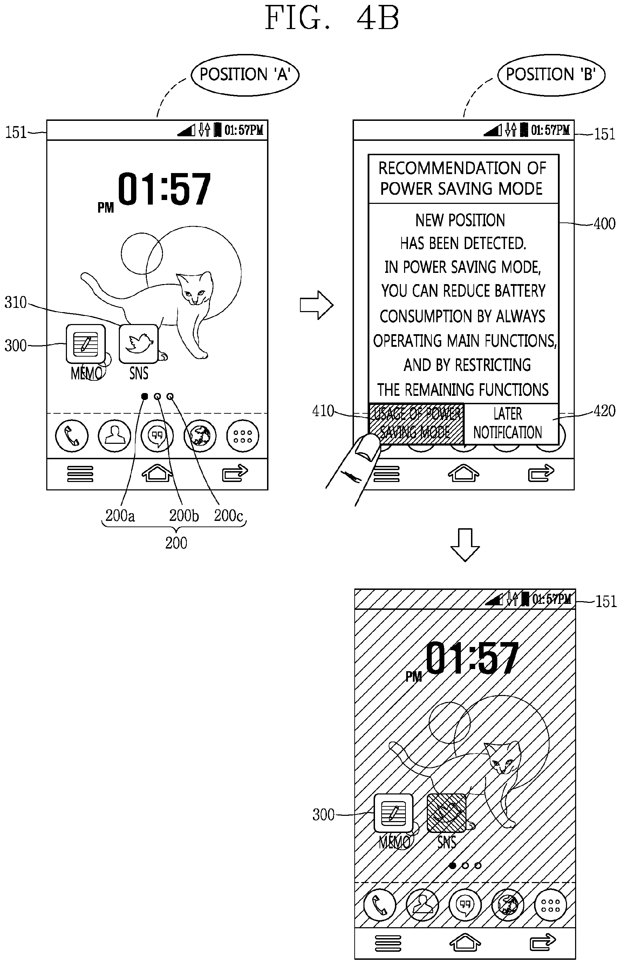

The preset condition may be a condition that path information generated as position information is interworked with time does not correspond to a preset path. For instance, as shown in FIG. 4B, if it is sensed that a current position of the mobile terminal corresponds to a position 'B' different from a preset position 'A', the controller 180 can display notification information for execution of a power saving mode, on the display unit 151. The preset position may be stored by a user or by the controller 180. When the preset position is stored by the controller 180, the preset position may be a position sensed by a position sensing module of the mobile terminal, which may be a position of a home or a company.

In this instance, if a position rather than the preset position is sensed, the controller 180 can recommend a power saving mode for battery saving. That is, in an embodiment of the present invention, if a user is located at a position where a charging operation cannot be easily performed, a power saving mode is implemented so that a risk of discharge a battery can be reduced.

The notification information can be output in the form of a pop-up window 400. The pop-up window 400 may include information related to a power saving mode, a graphic object 410 for execution of a power saving mode, and a graphic object 420 for no execution of a power saving mode. If the graphic object 410 for execution of a power saving mode is selected, the controller 180 can execute a power saving mode. Further, if the graphic object 420 for no execution of a power saving mode is selected, the controller 180 can maintain a general mode without executing a power saving mode.

As another example, the controller 180 can output notification information for execution of a power saving mode, based on a position of the mobile terminal and a remaining amount of a battery. For instance, if a current position of the mobile terminal corresponds to 'B' different from the pre-stored position 'A' and a remaining amount of a battery is less than a preset amount, the controller 180 can display notification information for execution of a power saving mode, on the display unit 151.

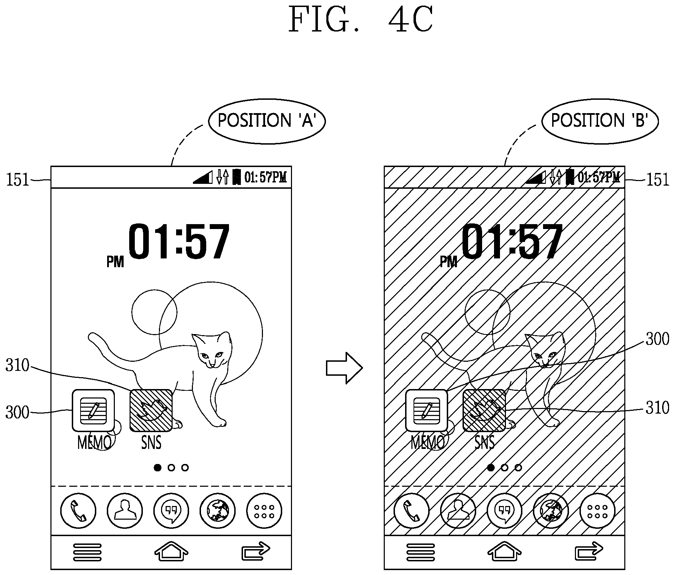

Once the preset condition is satisfied, the controller 180 can directly execute a power saving mode without outputting notification information. For instance, as shown in FIG. 4C, if a current position of the mobile terminal corresponds to 'B' different from the pre-stored position 'A', the controller 180 can directly execute a power saving mode.

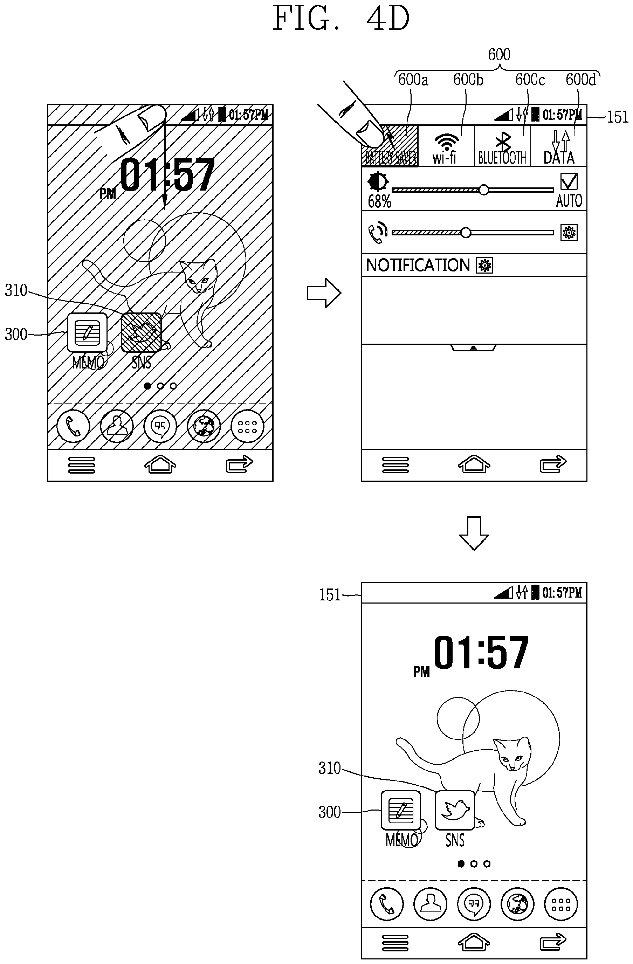

While the power saving mode is being executed, the controller 180 can release the power saving mode and convert the power saving mode into a general mode, according to a user's request or when a preset condition is satisfied. For instance, as shown in FIG. 4D, if a touch input is applied to the graphic object 600a related to execution of a power saving mode and included in the state display window, while the power saving mode is being executed, the controller 180 can release the power saving mode and may convert the power saving mode into a general mode.

As another example, if it is sensed that a current position of the mobile terminal corresponds to the pre-stored position 'A' while the power saving mode is being executed, the controller 180 can output notification information to a user so as to recommend a released state of the power saving mode. In this instance, the controller 180 can determine that the power saving mode is not required any longer, and may induce the user to convert the power saving mode into a general mode through notification information.

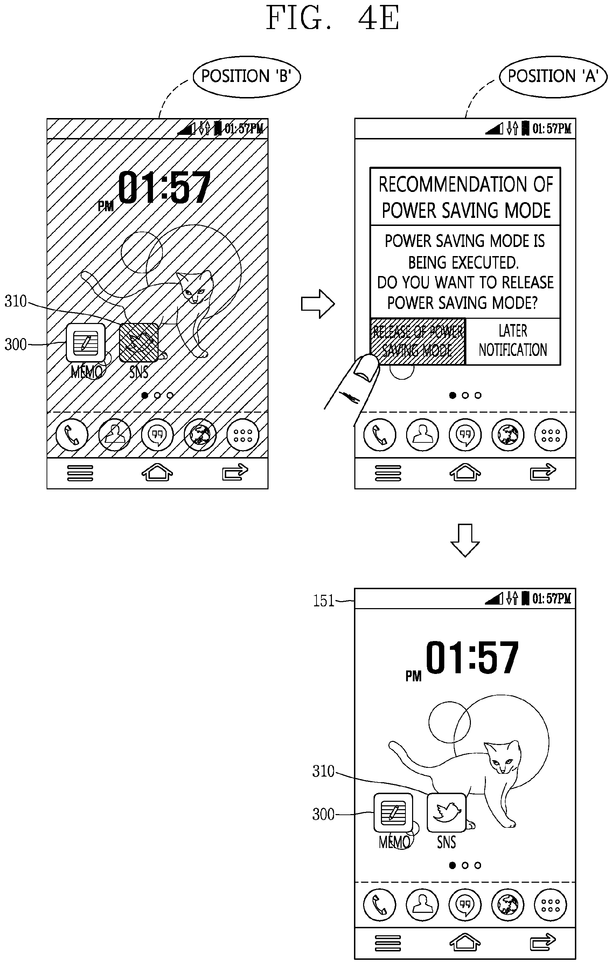

For instance, as shown in a second drawing of FIG. 4E, if the pre-stored position 'A' is sensed while the power saving mode is being executed, the controller 180 can output a pop-up window including notification information recommending a released state of the power saving mode. In this instance, the notification information may include a graphic object indicating a 'power saving mode releasing' function to release a power saving mode and to convert into a general mode, and a graphic object indicating a 'later notification' function to maintain a current power saving mode and to provide notification information later.

Upon execution of the power saving mode, the mobile terminal may display graphic objects corresponding to applications installed on the mobile terminal, on a home screen page, in the power saving mode (S320). Once the power saving mode is executed, the controller 180 can set the remaining applications to be in a background deactivated state, the remaining applications except for one or more applications set to be in a background activated state among a plurality of applications installed on the mobile terminal.

A home screen page, which includes one or more graphic objects related to one or more applications set to be in a background activated state, and one or more graphic objects related to one or more applications set to be in a background deactivated state among a plurality of applications installed on the mobile terminal, can be displayed on the display unit 151.

The home screen page may be screen information displayed on the display unit 151 in a standby state of the mobile terminal. The home screen page may be also called a standby screen, a menu screen, a home screen, etc. More specifically, the home screen page may be screen information displayed when the mobile terminal is turned on, or may be screen information including graphic objects related to functions of the mobile terminal such that the functions are executable. The home screen page has a size corresponding to the display unit 151, and may be provided in plurality in number according to a user's setting.

Referring to FIG. 5, the home screen page may include at least one of a state display region 210, an information display region 220, and a basic region 230. The state display region 210 may be a region where information related to an operation state of the mobile terminal is displayed. For instance, the state display region 210 may include information on a communication state of the mobile terminal, information on a current time, information on a remaining amount of a battery, information on an activated state of a sensor, etc.

The information display region 220 may be a region where at least one graphic object corresponding to at least one function executable in the mobile terminal is displayed. The at least one graphic object corresponding to at least one function executable in the mobile terminal may include an icon of an application and a widget. The icon may be corresponding to a function to execute an application. The widget may be simple information of an application, or may be an application program for displaying an execution screen on a home screen page.

The information display region 220 may include graphic objects 200a, 200b, 200c corresponding to a shortcut function for directly entering each home screen page when there are a plurality of home screen pages. The graphic objects 200a, 200b, 200c corresponding to a shortcut function may be formed such that the graphic object 200a corresponding to a home screen page being currently output to the display unit 151 has a different appearance (e.g., color, shape, size, etc.) from the graphic objects 200b, 200c corresponding to home screen pages not being output to the display unit 151, for a user's recognition of the home screen page being currently output to the display unit 151.

The basic region 230 may be a region selected by a user, or a region where icons related to preset applications are displayed when the mobile terminal is presented on the market. The basic region 230 may be a common region of the plurality of home screen pages. That is, the basic region 230 may be always displayed even if the plurality of home screen pages are switched from each other.

The basic region 230 may include applications to be always provided even if the plurality of home screen pages are switched from each other. For instance, the basic region 230 may include a phone application, a message application, etc. The basic region 230 may provide an application which is in a background activated state, in a power saving mode. That is, an application which is in a background activated state may be always provided on the basic region 230, in a power saving mode.

If there are a plurality of home screen pages, one of the plurality of home screen pages may be displayed on the display unit 151. When one of the plurality of home screen pages has been displayed on the display unit 151, if a preset type of touch is applied onto the display unit 151, the controller 180 can change the information display region 220 displayed on the one home screen page, into an information display region displayed on another home screen page.

The home screen page may be generated according to a user's setting, or based on a preset condition. For instance, if the mobile terminal enters a power saving mode, the controller 180 can generate a new home screen page including only graphic objects corresponding to applications which are in a background activated state in the power saving mode.

Even if the power saving mode is executed based on a request for execution of the power saving mode, the controller 180 can provide the same home screen page as in a general mode. This can solve a user's inconvenience occurring due to switching among home screen pages when a general mode is converted into a power saving mode.

Upon execution of the power saving mode, the controller 180 can control the display unit 151 to have a lower brightness than in a general mode. This can reduce current consumption due to a high brightness of the display unit 151. Further, even in the power saving mode, the controller 180 can execute a plurality of applications installed on the mobile terminal on the foreground. That is, in the power saving mode, execution of at least one application among a plurality of applications installed on the mobile terminal on the foreground is not restricted. Thus, in an embodiment of the present invention, a user can access all of the applications.

The plurality of applications may be pre-installed on the memory 170 of the mobile terminal when the mobile terminal is presented on the market, or may be installed on the memory 170 after being downloaded from an external server (e.g., google play), an android market, an application (app) store, etc., through a network, according to a user's selection. The mobile terminal according to an embodiment of the present invention may determine a background activation state of the applications, based on a preset type of touch input applied to graphic objects related to the applications, when the home screen page has been displayed on the display unit 151 in the power saving mode (S330).

The controller 180 can execute different functions related to the applications when different types of touch inputs are applied to the graphic objects included in the home screen page. The different types of touch inputs may include various types of touch inputs such as a short touch, a long touch, a multi touch, a drag touch and a double touch.

The functions related to the applications may include a function to execute the application on the foreground, a function to change a display position of the application on the home screen page, a function to delete the application from the memory 170, a function to change a size of the application, a function to determine a background activated state of the application, etc. For instance, if a short touch is applied to the graphic object included in the home screen page, the controller 180 can execute the application on the foreground. As another example, if a long touch is applied to the graphic object included in the home screen page, the controller 180 can change a background activated state of the application.

That is, in an embodiment of the present invention, in a power saving mode, a background activated state of the application may be changed on the home screen page, in a different manner from in a general mode. Thus, in an embodiment of the present invention, a background execution state of the application may be controlled on the home screen page in the power saving mode, without the mobile terminal's entering an additional screen. This can provide a user with an intuitive interface.

A method for changing the background execution state of the application will be explained in more detail. The controller 180 can sense a preset type of touch input applied onto a graphic object corresponding to the application, in the power saving mode. The preset type of touch may include various types of touch inputs such as a long touch, a multi touch and a double touch.

The controller 180 can determine a background activation state of the application. More specifically, when the application has been set to be in a background activated state, the controller 180 can change the state of the application into a background deactivated state, based on the preset type of touch. Further, when the application has been set to be in a background deactivated state, the controller 180 can change the state of the application into a background activated state, based on the preset type of touch.

For instance, as shown in a first drawing of FIG. 5A, the controller 180 can display a home screen page including the graphic object 300 corresponding to a memo application, and the graphic object 310 corresponding to a social network service (SNS) application, in a power saving mode. The SNS application corresponds to an application for providing an information sharing service as a plurality of users subscribe to a single server.

The controller 180 can determine a background activated state of the memo application, in response to a long touch input applied to the graphic object 300 corresponding to the memo application. For instance, when the memo application has been set to be in a background deactivated state, the controller 180 can change the state of the memo application into a background activated state.

If the state of the memo application is changed into the background activated state from the background deactivated state, the controller 180 can change an appearance of the graphic object 300 corresponding to the memo application. For instance, as shown in a second drawing of FIG. 5A, the controller 180 can change a color of the graphic object 300 corresponding to the memo application into a brighter color than a gray, a darker color than in the background activated state.

As another example, as shown in the first and second drawing of FIG. 5B, when the memo application has been set to be in a background deactivated state, the controller 180 can change the state of the memo application into a background activated state, in response to a long touch input applied to the graphic object 300 corresponding to the memo application. In this instance, as shown in a third drawing of FIG. 5B, the controller 180 can change the state of the memo application into a background deactivated state, in response to a long touch input applied to the graphic object 300 and change a color of the graphic object 300 corresponding to the memo application into a darker color than in the background activated state.

With such a configuration, a user can easily change a background activation state of each application on each home screen page. Further, the user can intuitively recognize a background activation state of each application on each home screen page. In the power saving mode, the controller 180 can control an application in a different manner, according to a background activated state or a background deactivated state of the application. More specifically, when the application is executed on the background, the controller 180 can control the application to be in either a background activated state or a background deactivated state.

That is, when the application has been set to be in a background activated state, the controller 180 can execute communication between the application and a function related to the application, such that the function related to the application is executable on the background when the application is executed on the background. On the contrary, when the application has been set to be in a background deactivated state, the controller 180 can not execute communication between the application and a function related to the application when the application is executed on the background.

For instance, if a request for execution of an application which has been set to be in a background activated state on the foreground is received, the controller 180 can execute the application on the foreground in the same manner as a general mode. Likewise, if a request for execution of an application which has been set to be in a background deactivated state on the foreground is received, the controller 180 can execute the application on the foreground. Once the application is executed on the foreground, the controller 180 can release an execution restricted state of applications which have been set to be restricted from being executed in a background deactivated state.

In this instance, if the application being executed on the foreground is executed on the background, the controller 180 can control the application to be in either a background activated state or a background deactivated state. That is, when the application has been set to be in a background deactivated state, if the application is re-executed on the background, the controller 180 can restrict a function related to the application and executable on the foreground.

On the contrary, when the application has been set to be in a background activated state, if the application is re-executed on the background, the controller 180 can continuously execute a function related to the application, the function which was being executed on the foreground. So far, has been explained a method for determining a background activation state of each application in a power saving mode.

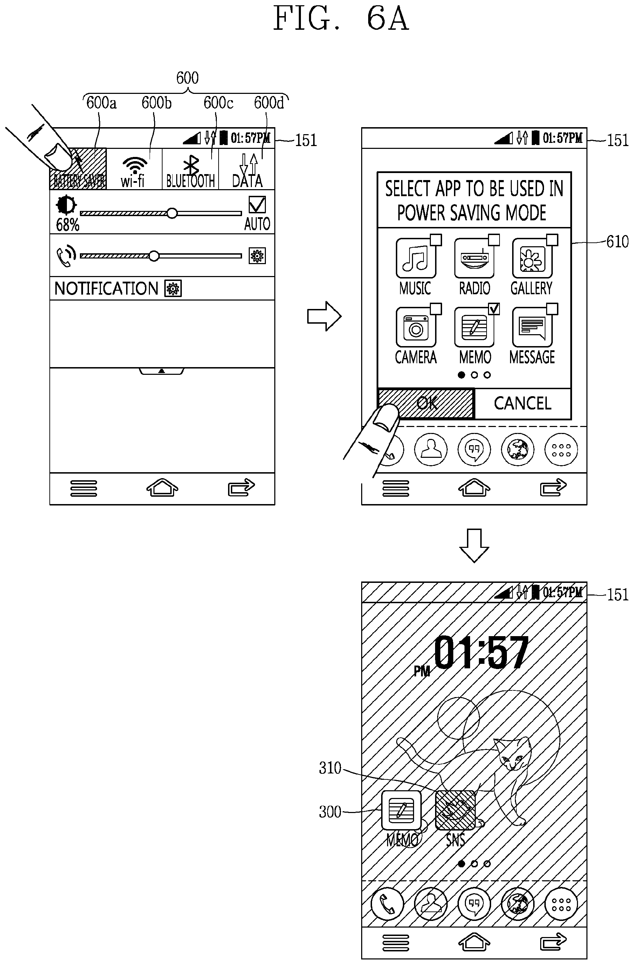

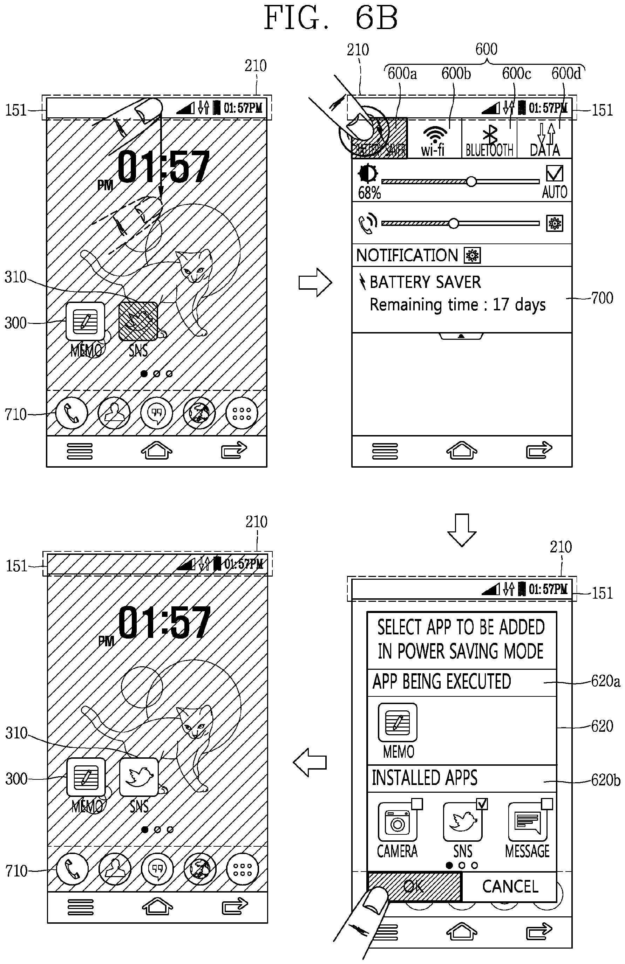

Hereinafter, a method for selecting an application to be set to be in a background activated state in a power saving mode will be explained in more detail. In particular, FIGS. 6A and 6B are conceptual views illustrating a method for selecting an application to be set to be in a background activated state in a power saving mode, in a mobile terminal according to an embodiment of the present invention. Once a power saving mode is executed, the controller 180 can set a plurality of applications installed on the mobile terminal, to be in either a background activated state or a background deactivated state.

A user can select an application to be set to be in a background activated state in the power saving mode. In this instance, an application which has not been selected by the user can be set to be in a background deactivated state in the power saving mode. As aforementioned, the controller 180 can select an application to be set to be in a background activated state in the power saving mode, by applying a preset type of touch input to a graphic object corresponding to the application on the home screen page.

Also, the controller 180 can select an application to be set to be in a background activated state in the power saving mode, by using a list of a plurality of applications installed on the mobile terminal. For instance, as shown in a first drawing of FIG. 6A, the controller 180 can execute a power saving mode according to a user's request. As shown in a second drawing of FIG. 6A, once the power saving mode is executed, the controller 180 can display, on the display unit 151, an application list 610 of a plurality of applications installed on the mobile terminal, such that a user selects an application to be set to be in a background activated state in the power saving mode. The application list 610 may be displayed only when a power saving mode is firstly executed, or may be displayed whenever the power saving mode is executed.

If the application list 610 is displayed, the controller 180 can select at least one application among the plurality of applications included in the application list 610 according to a user's selection. For instance, as shown in a second drawing of FIG. 6A, the controller 180 can select a memo application.

Then, the controller 180 can set at least one application selected by the user to be in a background activated state, and set the remaining applications to be in a background deactivated state. For instance, as shown in a third drawing of FIG. 6A, the controller 180 can set the remaining applications other than the memo application, to be in a background deactivated state.

After the application has been set to be in a background activated state in the power saving mode, the controller 180 can change (add or delete) the application to be set to be in a background activated state, according to a user's request. For instance, as shown in a first drawing of FIG. 6B, the mobile terminal may be in a power saving mode where only a memo application is set to be in a background activated state, and the remaining applications are set to be in a background deactivated state. The controller 180 can output the state display window based on a preset type of touch input applied onto a preset region on the display unit 151 (e.g., the state display region 210). As aforementioned, the state display window may include the graphic object 600 related to state information of the mobile terminal and change of the state information.

The state display window may further include time information 700 indicating a remaining time (usable time duration) of the mobile terminal according to a remaining amount of a battery, in a power saving mode. The remaining time of the mobile terminal may be calculated based on a current remaining amount of a battery, and a user's average current consumption amount. For instance, as shown in a second drawing of FIG. 6B, the time information 700, indicating that the mobile terminal can be used for 17 days in a power saving mode based on a current remaining amount of a battery, may be displayed on the state display window.

The controller 180 can execute different functions related to a power saving mode on the state display window, based on different types of touch inputs applied to the graphic object 600a related to execution of a power saving mode. More specifically, if a short touch is applied to the graphic object 600a related to execution of a power saving mode, the controller 180 can execute a power saving mode, or may release the executed power saving mode. For instance, if a short touch is applied to the graphic object 600a related to execution of a power saving mode, during a power saving mode, the controller 180 can release the executed state of the power saving mode and may execute a general mode. If a short touch is applied to the graphic object 600a related to execution of a power saving mode, during a general mode, the controller 180 can release the executed state of the general mode and may execute a power saving mode.

The graphic object 600a related to execution of a power saving mode may be displayed in a different color, according to an executed mode of the mobile terminal. For instance, when the mobile terminal is in a power saving mode, the graphic object 600a may be displayed in green. Further, when the mobile terminal is in a general mode, the graphic object 600a may be displayed in gray.

As shown in a second drawing of FIG. 6B, the controller 180 can add or delete an application to be set to be in a background activated state in the power saving mode, based on a long touch input applied to the graphic object 600a related to execution of a power saving mode. For instance, the controller 180 can display an application list including a plurality of applications installed on the mobile terminal, on the display unit 151, in the form of a pop-up window 620, based on a long touch input applied to the graphic object 600a related to execution of a power saving mode.

The pop-up window 620 may include application information 620a about an application set to be in a background activated state in a power saving mode, and application information 620b about a plurality of applications installed on the mobile terminal. The controller 180 can set at least one application to be in a background activated state, among a plurality of applications installed on the mobile terminal, according to a user's selection. Also, the controller 180 can release the set state of the at least one application, according to a user's selection.

For instance, as shown in a third drawing of FIG. 6B, the controller 180 can add a phone application as an application set to be in a background activated state. In this instance, as shown in a fourth drawing of FIG. 6B, the controller 180 can display the graphic object 300 corresponding to the memo application, and the graphic object 310 corresponding to the SNS application, so as to be visually distinguishable from the remaining applications. For instance, the controller 180 can display the graphic object 300 corresponding to the memo application and the graphic object 310 corresponding to the SNS application in a bright color, whereas the controller 180 can display the remaining applications in a dark color.

The above description describes a method for selecting an application to be set to be in a background activated state in a power saving mode by a user. Hereinafter, a method for automatically selecting an application to be set to be in a background activated state in a power saving mode will be explained. The controller 180 of the mobile terminal according to an embodiment of the present invention can detect an application to be set to be in a background activated state in a power saving mode, based on a preset condition. That is, in a power saving mode, an application which has not been set to be in a background activated state may be in a background deactivated state.

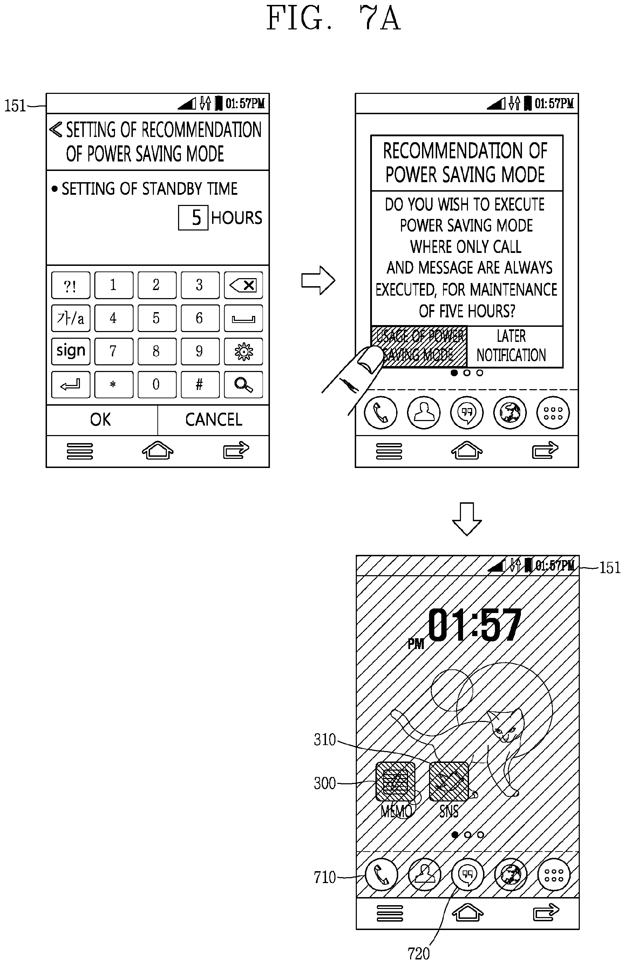

The preset condition may be a condition related to at least one of an application usage pattern, a remaining amount of a battery, a power maintenance time, a recently-used application, and a current consumption amount of an application. More specifically, as shown in a first drawing of FIG. 7A, when a user inputs a power maintenance time, the controller 180 can detect a current amount consumable per hour, based on the power maintenance time and a remaining amount of a battery.

Then, the controller 180 can detect at least one application, based on the current amount consumable per hour, and a current consumption amount of each of a plurality of applications installed on the mobile terminal. For instance, if the current amount consumable per hour is 60ma/h, the controller 180 can detect applications having a current consumption amount of 60ma/h or less. Then, the controller 180 can set the detected applications as applications to be used in a power saving mode.

As shown in a second drawing of FIG. 7A, the controller 180 can display notification information including information about the detected applications, on the display unit 151. For instance, the detected applications may be a message application 720 and a call application 710. The notification information may further include a graphic object for selecting whether to execute a power saving mode. For instance, as shown in a second drawing of FIG. 7A, the notification information may further include a graphic object corresponding to a 'power saving mode execution' function to execute a power saving mode, and a graphic object corresponding to a 'later notification' function to provide notification information later without executing a power saving mode.

Once the power saving mode execution function is selected, the controller 180 can execute a power saving mode where the detected applications are set to be in a background activated state, and the remaining applications are set to be in a background deactivated state. Once the later notification function is selected, the controller 180 can continuously execute a general mode without executing a power saving mode.

As another example, the controller 180 can detect an application to be set to be in a background activated state in a power saving mode, according to an application usage pattern by a user. The application usage pattern may include at least one of an application execution frequency (number of times), an application execution time, and a recently-used application.

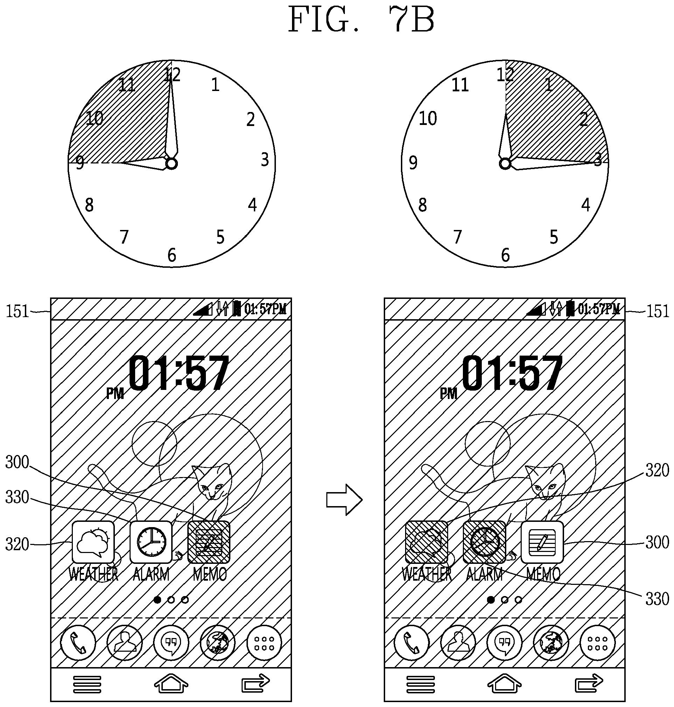

For instance, as shown in FIG. 7B, when a weather application 320 for providing weather information, and an alarm application 330 for outputting an alarm are frequently executed between 9:00 AM and 12:00 PM, the controller 180 can set the weather application 320 and the alarm application 330 to be in a background activated state. At the same time, the controller 180 can set the remaining applications installed on the mobile terminal (e.g., a memo application, an address application for outputting contact information, a web browser application, etc.) to be in a background deactivated state, between 9:00 AM and 12:00 PM.

If a memo application is frequently executed between 12:00 PM and 3:00 PM, the controller 180 can set the memo application to be in a background activated state, and may set the remaining applications installed on the mobile terminal (e.g., a weather application, an alarm application, etc.) to be in a background deactivated state, between 12:00 PM and 3:00 PM. In this instance, on the display unit 151, the graphic object 300 corresponding to the memo application may be displayed so as to indicate a background activated state, and graphic objects 320, 330 related to the remaining applications may be displayed so as to indicate a background deactivated state.

As another example, if a request for execution of a power saving mode is received, the controller 180 can detect an application recently-used before execution of a power saving mode. The recently-used application may be an application which has been executed at a time point proximate to an execution time of a power saving mode. The recently-used application may be a predetermined number of applications which have been executed most recently based on an execution time of a power saving mode. Alternatively, the recently-used application may be an application which has been executed for a preset time period based on an execution time of a power saving mode.

Once a power saving mode is executed, the controller 180 can set the recently-used application to be in a background activated state, and may set the remaining applications to be in a background deactivated state. The above description describes a method for setting a background activated state of an application, based on a preset condition. In an embodiment of the present invention, consumption of a standby current occurring as an unnecessary application is activated on the background can be reduced.

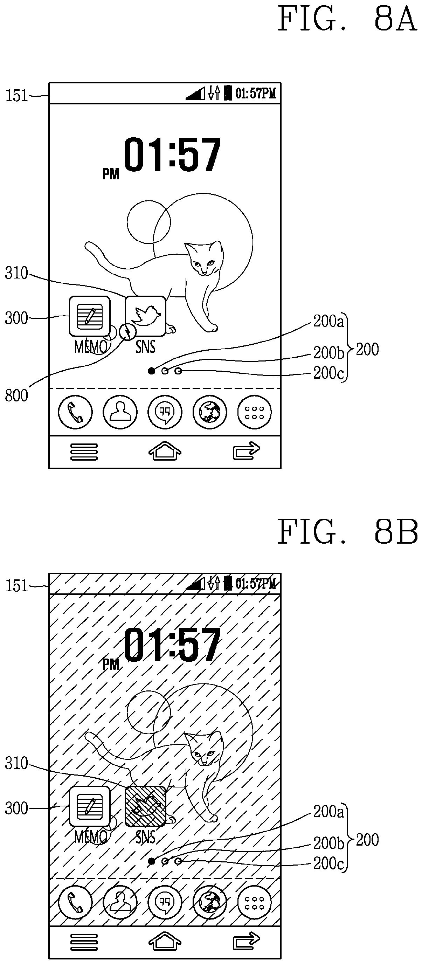

Hereinafter, a method for displaying a background execution state of an application in a power saving mode will be explained. In particular, FIGS. 8A and 8B are conceptual views illustrating a method for displaying a background execution state of an application in a power saving mode.

Once a power saving mode is executed, at least one application among a plurality of applications installed on the mobile terminal may be set to be in a background activated state, and the remaining applications may be set to be in a background deactivated state. In this instance, a user cannot recognize which application is being executed on the background on the home screen page, or cannot recognize an application is in a background activated state or a background deactivated state. That is, when an application is being executed on the background, a user cannot recognize a state of the application being executed on the background, since an execution state of the application is not output to the display unit 151.

Thus, in an embodiment of the present invention, in a power saving mode, an output type (or visual appearance or output form) of a graphic object corresponding to an application included in a home screen page may be determined based on a background activation state of the application. The output type of the graphic object corresponds to an appearance of the graphic object displayed on the display unit 151, e.g., a brightness, a color, a size, a shape, etc.

That is, in a power saving mode, the controller 180 can display a graphic object corresponding to an application set to be in a background deactivated state, and a graphic object corresponding to an application set to be in a background activated state, in a visually-distinguishable manner, among graphic objects corresponding to applications included in a home screen page.

More specifically, as shown in FIG. 8A, in a power saving mode, the controller 180 can display the graphic object 310 corresponding to an application set to be in a background deactivated state, together with a graphic object 800 indicating notification information. The graphic object 800 indicating notification information may be information about a background deactivated state of an application. Alternatively, the controller 180 can display the graphic object 800 indicating notification information, in an overlapped manner with the graphic object 310 corresponding to the application set to be in a background deactivated state.

The controller 180 can not display the graphic object 300 corresponding to an application set to be in a background activated state, together with the graphic object 800 indicating notification information. That is, in an embodiment of the present invention, since a graphic object corresponding to an application set to be in a background deactivated state is output together with notification information, a user can be informed of the background deactivated state of the application.

The display unit 151 may output the graphic object differently according to an LED type or an LCD type. More specifically, in case of the LED type, the display unit 151 may output the graphic object by controlling a brightness of the graphic object. On the contrary, in case of the LCD type, the display unit 151 may output the graphic object by controlling a color of the graphic object.

The controller 180 can output a background activated state and a background deactivated state of applications in a different manner, according to an output type of the display unit 151. For instance, as shown in FIG. 8B, if the display unit 151 adopts an LCD type, the controller 180 can display the remaining applications except for an application set to be in a background activated state, in gray, in a power saving mode. In this instance, the application set to be in a background activated state may be displayed in another color rather than the gray color, so as to be visually distinguished from the remaining applications set to be in a background deactivated state.

As another example, if the display unit 151 adopts an LED type, the controller 180 can display the remaining applications except for an application set to be in a background activated state, in a dark color, in a power saving mode. In this instance, the application set to be in a background activated state may be displayed brightly, whereas the remaining applications set to be in a background deactivated state may be displayed darkly.

The above description describes a method for displaying a background execution state of an application on a home screen page. In an embodiment of the present invention, a user can intuitively recognize a background execution state of an application on the home screen page.

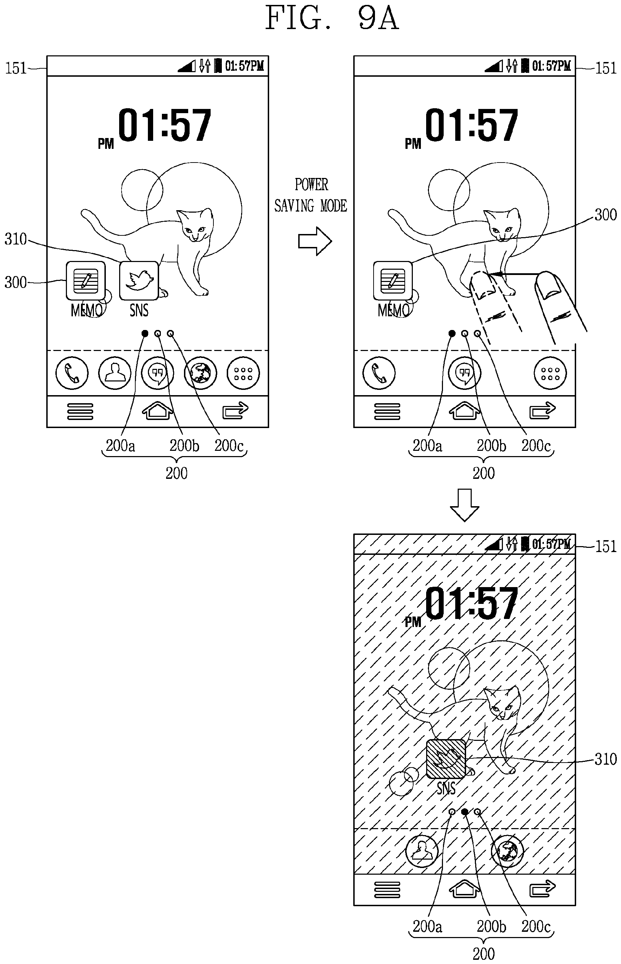

Hereinafter, a method for providing a home screen page in a power saving mode will be explained. FIGS. 9A to 9E are conceptual views illustrating a method for providing a home screen page in a power saving mode. Once a power saving mode is executed, the mobile terminal can provide the same home screen page as in a general mode, as aforementioned. The same home screen page as in a general mode corresponds to a type of a graphic object included in a home screen page, and a display type (size, color, position, etc.) of a graphic object are the same in a power saving mode and a general mode.

As another example, once a power saving mode is executed, the mobile terminal can provide a home screen page including only a graphic object corresponding to an application set to be in a background activated state. For convenience, in an embodiment of the present invention, a home screen page including only a graphic object corresponding to an application set to be in a background activated state is called a power saving home screen page.

Once a power saving mode is executed, the controller 180 can set one of a plurality of home screen pages implemented in a general mode, as a power saving home screen page. Alternatively, the controller 180 can generate a new home screen page different from a plurality of home screen pages implemented in a general mode, as a power saving home screen page. That is, in an embodiment of the present invention, applications recommended to be used in a power saving mode can be provided at one time, as the power saving home screen page is provided.

For instance, as shown in a first drawing of FIG. 9A, the controller 180 can provide three home screen pages in a general mode. Once a power saving mode is executed, the controller 180 can set one of the three home screen pages as a power saving home screen page. The power saving home screen page may include thereon an application set to be in a background activated state. For instance, as shown in a second drawing of FIG. 9A, the controller 180 can provide the first home screen page among the three home screen pages, as a power saving home screen page. The power saving home screen page may include thereon the graphic object 300 corresponding to the memo application set to be in a background activated state in a power saving mode.

The controller 180 can display a graphic object corresponding to an application set to be in a background deactivated state in a power saving mode, on the remaining home screen page. For instance, as shown in a third drawing of FIG. 9A, the controller 180 can display the graphic object 310 corresponding to an SNS application set to be in a background deactivated state in a power saving mode, on the second home screen page among the three home screen pages.

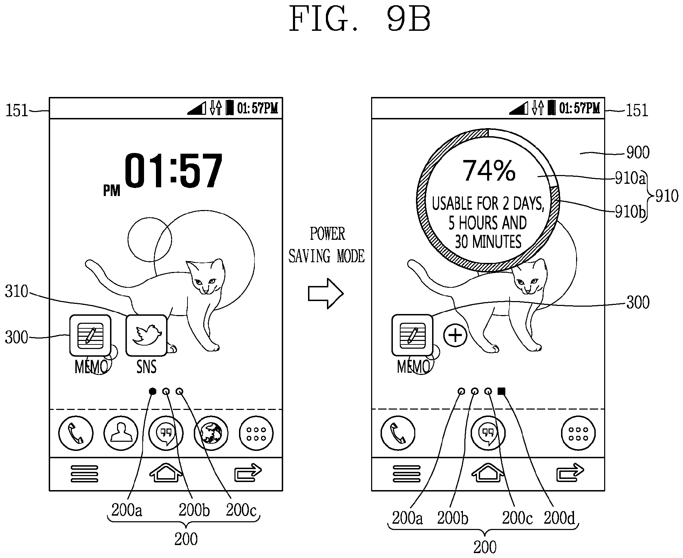

As another example, as shown in first and second drawings of FIG. 9B, once a power saving mode is executed, the controller 180 can generate a new home screen page different from a plurality of home screen pages implemented in a general mode, as a power saving home screen page 900. The power saving home screen page 900 may include thereon a graphic object corresponding to an application set to be in a background activated state in a power saving mode, a current remaining amount of a battery (910b), and a power maintenance time (910a) indicating a usable time of the mobile terminal based on the current remaining amount of the battery.

The controller 180 can further display a shortcut graphic object 200d corresponding to the power saving home screen page 900. The shortcut graphic object 200d corresponding to the power saving home screen page 900 may have a different shape from the remaining shortcut graphic objects 200a, 200b, 200c related to home screen pages including applications set to be in a background deactivated state. For instance, as shown in a second drawing of FIG. 9B, the shortcut graphic object 200d may be displayed in a quadrangular shape, and the remaining shortcut graphic objects 200a, 200b, 200c may be displayed in a circular shape. With such a configuration, a user can distinguish the power saving home screen page 900 from the remaining home screen pages.

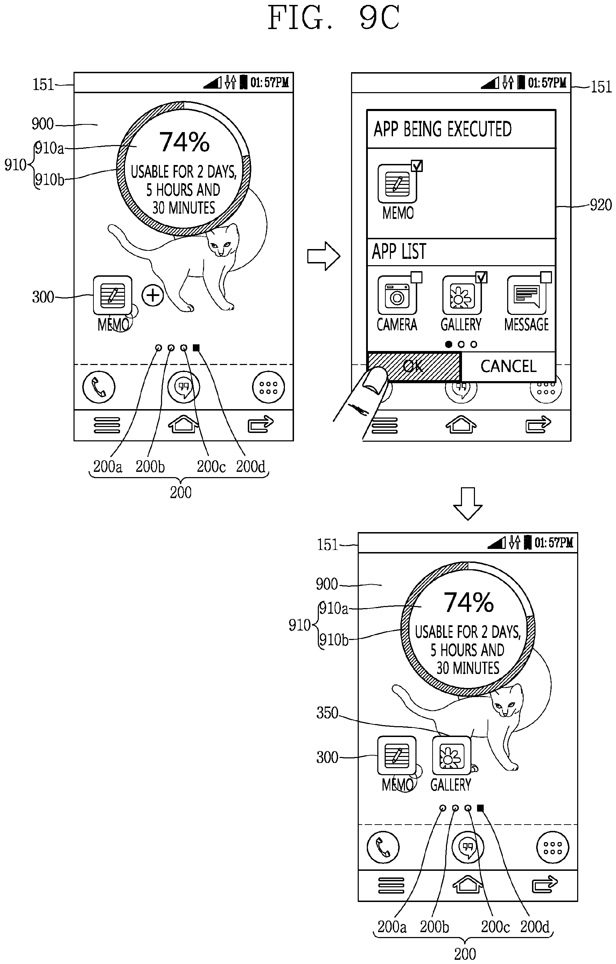

The controller 180 can add or delete an application to be set to be in a background activated state, onto or from the power saving home screen page. In case of adding a graphic object corresponding to an application onto the power saving home screen page, the controller 180 can set the graphic object to be in a background activated state. For instance, as shown in a first drawing of FIG. 9C, the power saving home screen page may include thereon a graphic object indicating an application addition function.

As shown in a second drawing of FIG. 9C, the controller 180 can display, on the display unit 151, an application list 920 including a plurality of applications installed on the mobile terminal, based on a touch input applied onto the graphic object. The controller 180 can add at least one application onto the power saving home screen page, by using the application list 920. For instance, as shown in a second drawing of FIG. 9C, the controller 180 can select a gallery application for providing images, according to a user's selection.

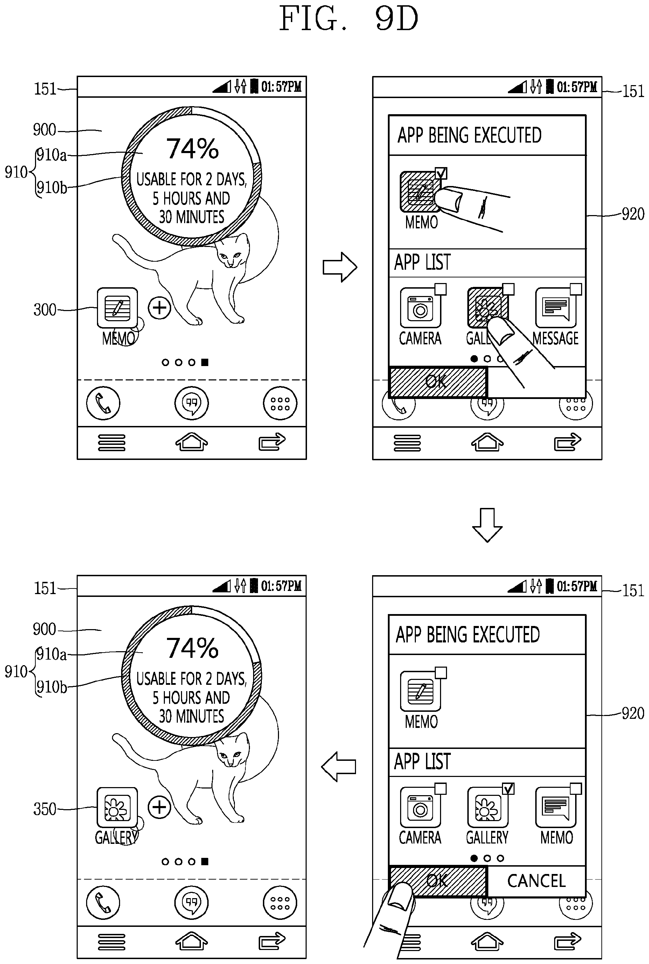

Once the galley application is selected, the controller 180 can display the gallery application on the power saving home screen page, and may set the gallery application to be in a background activated state. On the contrary, as shown in second and third drawings of FIG. 9D, the controller 180 can select the galley application, not the memo application included in the power saving home screen page, according to a user's selection. In this instance, the controller 180 can control the graphic object 300 corresponding to the memo application to disappear from the power saving home screen page, and may set the memo application to be in a background deactivated state. The controller 180 can display a graphic object 350 related to the galley application on the power saving home screen page, and may set the galley application to be in a background activated state.

That is, in an embodiment of the present invention, as an application is added or deleted onto or from a home screen page, a background activation state of the application can be determined in a convenient manner. Further, when deleting a graphic object corresponding to an application from the power saving home screen page, the controller 180 can set the deleted application to be in a background deactivated state.

That is, in an embodiment of the present invention, as an application is added or deleted onto or from the power saving home screen page, a background activated state or a background deactivated state of the application can be set. Further, when a current mode of the mobile terminal is converted into a general mode from a power saving mode, the controller 180 can not provide the power saving home screen page which was being provided in the power saving mode, any longer.

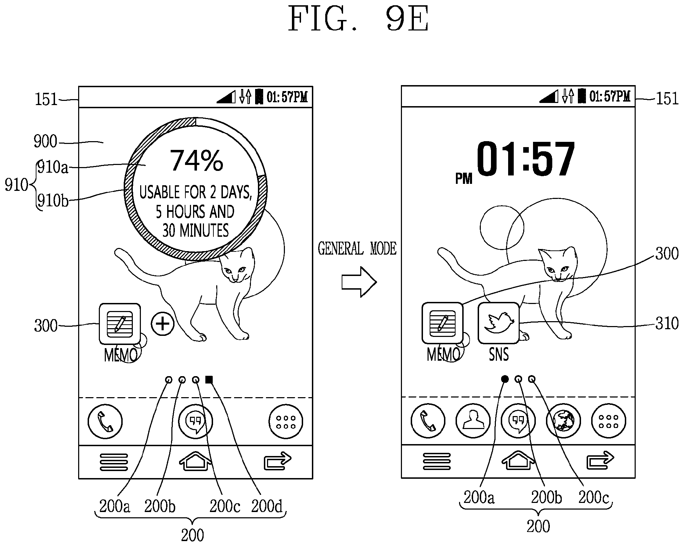

For instance, as shown in first and second drawings of FIG. 9E, when a current mode of the mobile terminal is converted into a general mode from a power saving mode, the controller 180 can control the power saving home screen page to disappear from the display unit 151. That is, the power saving home screen page may be a home screen page temporarily provided only in the power saving mode.

In this instance, the controller 180 can release a background deactivated state of an application which has been set to be in the background deactivated state. That is, if the application is executed on the background in a general mode, the controller 180 can set the application to be in a background activated state. The above description describes a method for providing a power saving home screen page in a power saving mode. In an embodiment of the present invention, applications recommended to be used in a power saving mode can be provided at one time through the power saving home screen page. Further, a user can more rapidly access the applications recommended to be used in the power saving mode, through the power saving home screen page.

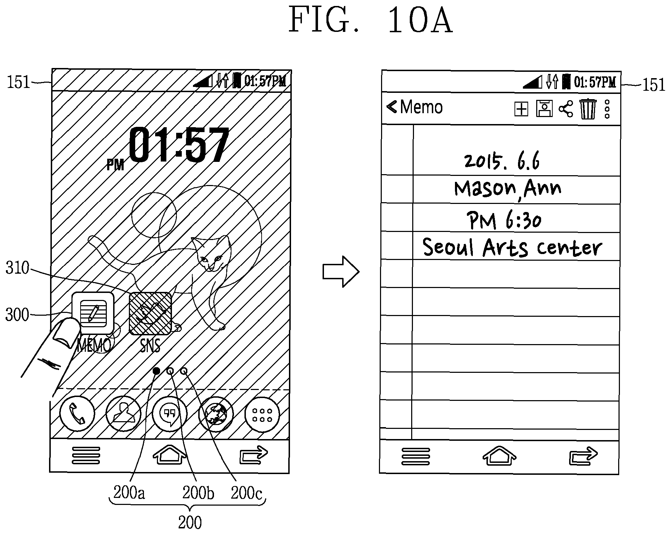

Hereinafter, a method for executing applications in a power saving mode will be explained. FIGS. 10A to 10C are conceptual views illustrating a method for executing applications in a power saving mode. The mobile terminal of the present invention may control execution of an application on the background in a power saving mode. In the same manner as a general mode, the controller 180 of the mobile terminal may control all applications installed on the mobile terminal, to be executed on the foreground in a power saving mode. That is, in an embodiment of the present invention, in a power saving mode, execution of an application on the foreground is not restricted, but execution of an application on the background may be controlled.

In a power saving mode, the controller 180 can execute an application set to be in a background activated state, and an application set to be in a background deactivated state, on the foreground in a different manner. More specifically, if a user's request for execution of an application on the foreground is received, the controller 180 can execute the application which has been set to be in a background activated state, in the same manner as a general mode.

That is, when the application set to be in a background activated state is being executed on the background, the controller 180 can immediately execute the application without loading the application from the memory 170. On the contrary, when the application set to be in a background activated state is not being executed on the background (i.e., if the application is in a background deactivated state), the controller 180 can execute the application after loading the application from the memory 170.

For instance, as shown in a first drawing of FIG. 10A, when the memo application is set to be in a background activated state, a short touch input may be applied to the graphic object 300 corresponding to the memo application, such that the memo application is executed on the foreground. In this instance, as shown in a second drawing of FIG. 10A, the controller 180 can execute the memo application in the aforementioned manner.

Upon completion of the execution of the application set to be in a background activated state on the foreground, the controller 180 can execute the application on the background in an activated state, or may deactivate the application. On the contrary, if a user's request for execution of an application on the foreground is received, the controller 180 can execute the application which has been set to be in a background deactivated state, on the foreground.

In this instance, the controller 180 can output notification information indicating that the application requested to be executed on the foreground has been set to be in a background deactivated state, before executing the application. The notification information may include information indicating that the application has been set to be in a background deactivated state, and the application will be reset to be in a background deactivated state after being executed on the foreground.

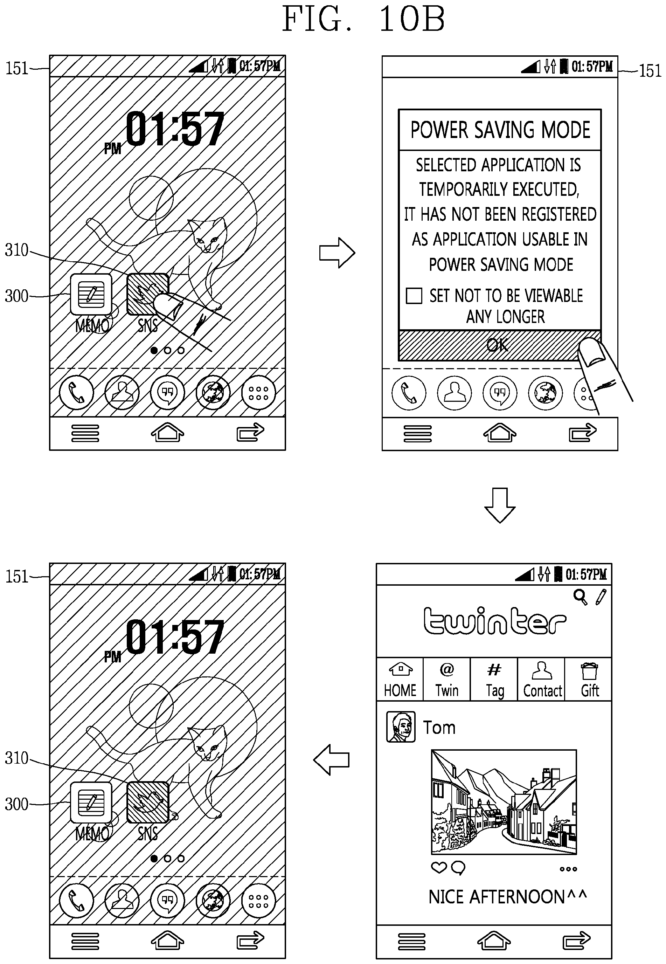

For instance, as shown in a first drawing of FIG. 10B, the controller 180 can sense a short touch input applied onto the graphic object 310 corresponding to an application set to be in a background deactivated state, so as to execute the application on the foreground. In this instance, as shown in a second drawing of FIG. 10B, the controller 180 can output notification information, before executing the application set to be in a background deactivated state on the foreground. That is, in an embodiment of the present invention, when an application requested to be executed has been set to be in a background deactivated state, a user can recognize that the application can be used only when a function related to the application is being executed on the foreground.

The controller 180 can execute the application set to be in a background deactivated state, in the same manner as an application set to be in a background activated state. Upon completion of the execution of the application set to be in a background deactivated state, the controller 180 can execute the application on the background in a deactivated state, or may deactivate the application.

That is, as shown in FIG. 10B, upon completion of the execution of the application set to be in a background deactivated state on the foreground, the controller 180 can reset the application to be in a background deactivated state. Thus, when the application set to be in a background deactivated state is executed on the background after being executed on the foreground, even if a request for execution of a function related to the application is received from the application, the function related to the application may not be executed.

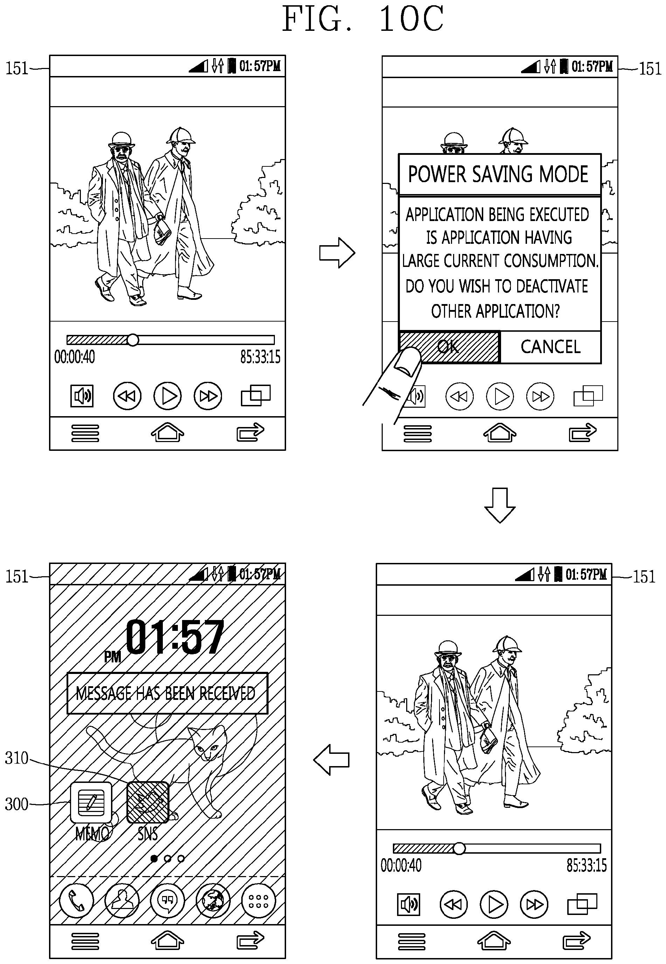

When a specific application is being executed in a power saving mode, the controller 180 can set the remaining applications installed on the mobile terminal, to be in a background deactivated state. More specifically, when a specific application is being executed on the foreground in a power saving mode, the controller 180 can detect a present current consumption amount of the specific application. For instance, as shown in a first drawing of FIG. 10C, the controller 180 can execute a video play application for playing videos (moving images), on the foreground in a power saving mode. The controller 180 can detect a current amount consumed by the video play application.

If the detected current amount per hour of the application being executed on the foreground is more than a preset current amount, the controller 180 can output notification information for setting the remaining applications to be in a background deactivated state. The preset current amount may be preset as a reference value, or may be set based on a present remaining amount of a battery. For instance, the preset current amount may be preset on the memory 170, as a specific value. Alternatively, the preset current amount may be set as a value calculated by deducting 10% from a present remaining amount of a battery, by the controller 180.

The notification information may be information inquiring whether to set the remaining applications installed on the mobile terminal to be in a background deactivated state, from a user. For instance, as shown in a second drawing of FIG. 10C, while a video application is being executed on the foreground, the controller 180 can output notification information in the form of a pop-up window, the notification information inquiring whether to set the remaining applications installed on the mobile terminal to be in a background deactivated state, from a user.

If a request for setting all applications installed on the mobile terminal to be in a background deactivated state is received from the user, the controller 180 can set the remaining applications except for the specific application being executed on the foreground, to be in a background deactivated state. Upon completion of the execution of the specific application on the foreground, the controller 180 can release a background deactivated state of the remaining applications set to be in a background deactivated state.

In this instance, an application being executed on the background may execute a function related thereto, because a background deactivated state thereof has been released. For instance, a memo application may receive a message from an external server or an external terminal, through network communication, when a background deactivated state thereof has been released.

As another example, when a current consumption amount per hour of an application being executed on the foreground is more than a preset value, the controller 180 can set only applications unrelated to the application being executed on the foreground, to be in a background deactivated state, among a plurality of applications installed on the mobile terminal.

The applications unrelated to the application being executed on the foreground may be applications not executed together with the application being executed on the foreground. For instance, if the application being executed on the foreground is a video application, the application unrelated to the video application may be a message application.

The controller 180 can not set applications related to the application being executed on the foreground, to be in a background deactivated state. In this instance, the applications related to the application being executed on the foreground may be set to be in a background activated state. For instance, if a video application is being executed on the foreground, the controller 180 can set a video edition application to be in a background activated state.

When a current consumption amount per hour of the application being executed on the foreground is more than a preset value, the controller 180 can set at least one application to be in a background deactivated state, based on an update type of a plurality of applications installed on the mobile terminal. The update type may be a type to use network communication by the applications. For instance, the update type may include a type to download a file to be installed by the applications, a type to receive a message from an external server or an external terminal, etc.

If the update type corresponds to a type to download a file to be installed by the applications, the controller 180 can set the applications to be in a background deactivated state. If the update type corresponds to a type to receive a message from an external server or an external terminal, the controller 180 can set the applications to be in a background activated state.

With such a configuration, in an embodiment of the present invention, while an application having a large current consumption amount is being executed, a standby current of the mobile terminal can be minimized. Further, in case of an application being executed on the background of the mobile terminal, execution of a function related to the application may be restricted on the background of the mobile terminal. Thus, in an embodiment of the present invention, consumption of a standby current, due to execution of a function related to an application on the background, can be prevented without an additional control command applied onto the background.

Further, in an embodiment of the present invention, since an application being executed on the background is continuously performed without being terminated, consumption of a standby current can be reduced, and a user can rapidly access the application.

Further, in an embodiment of the present invention, when an application is being executed on the background, only execution of a function related to the application is restricted, without unloading of the application from a memory. Accordingly, consumption of a standby current can be reduced, and a user can rapidly access the application.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

## Claims

1. A mobile terminal, comprising:
a display unit (151),
a controller(180) configured to:
enter the mobile terminal into a power saving mode which is able to control execution of applications installed in the mobile terminal on a background,
display a home screen page in the display unit (151) including graphic objects corresponding to the applications in the power saving mode, and control the background applications to be in either a background activated state or a background deactivated state, in response to a preset type of touch input applied by a user of the mobile terminal onto the graphic objects of the applications, wherein,
when one of the applications is in the background deactivated state, upon reception of a request generated from said application for execution of a function related to said application, do not execute the function related to said application, and
when one of the applications is in the background activated state, upon reception of the request generated from said application for execution of the function related to said application, execute the function related to said application,
**characterized in that**, in the power saving mode, the controller is further configured to :
execute a specific background application in a foreground upon reception of a request for executing said application from the user,
detect a present current consumption amount of the specific foreground application, and when the present current consumption amount is more than a preset current amount, wherein the preset current amount is set based on a present remaining amount of a battery of the mobile terminal,
display a pop-up window on the display unit (151) of the mobile terminal inquiring the user of the mobile terminal about whether to set the remaining background applications to be in the background deactivated state, and
set the remaining background applications in the background deactivated state in response to a corresponding touch input from the user to the inquiry.

2. The mobile terminal of claim 1, wherein when the function related to one of the applications is not executed, the controller (180) is further configured to transmit, to said application, a feedback signal indicating that the request has been refused.

3. The mobile terminal of claim 1, wherein the controller (180) is further configured to display graphic objects on the display unit (151) corresponding to applications in the background activated state to be visually distinguishable from graphic objects corresponding to applications in the background deactivated state.

4. The mobile terminal of claim 1, wherein the controller (180) is further configured to:
enter the mobile terminal into the power saving mode based on a condition related to a position of the mobile terminal.

5. The mobile terminal of claim 1, wherein the controller (180) is further configured to display an added home screen page on the display unit (151) including only graphic objects corresponding to applications in the background activated state.

6. The mobile terminal of claim 1, wherein the controller (180) is further configured to convert the background activated state of one of the applications into the background deactivated state, based on a preset type of touch applied to the graphic object of said application.

7. The mobile terminal of claim 1, wherein the controller (180) is further configured to set the background activated state or the background deactivated state of the applications, based on a usage pattern of the applications.

8. The mobile terminal of claim 1, wherein upon completion of the execution of the specific application in the foreground, the controller (180) is further configured to release the background deactivated state of the remaining applications.

9. The mobile terminal of claim 1, wherein the applications are loaded into a random access memory of the mobile terminal in the background deactivated state and the background activated state.

10. The mobile terminal of claim 1, wherein when one of the applications is in the background deactivated state, and upon reception of a request for executing said application in the foreground, the controller (180) is further configured to directly convert the background deactivated state of said application to an activated state in the foreground.

11. The mobile terminal of claim 10, wherein the controller (180) is further configured to control said application to be in the activated state only when the application is being executed in the foreground.

12. The mobile terminal of claim 11, wherein when said application is terminated in the activated state, the controller (180) is further configured to control said application to be in the background deactivated state from the activated state.

13. A method of controlling a mobile terminal, the method comprising:
entering the mobile terminal into a power saving mode which is able to control execution of applications installed in the mobile terminal on a background;
displaying, via a display unit (151) of the mobile terminal, a home screen page including graphic objects corresponding to the applications in the power saving mode,
executing, via a controller (180) of the mobile terminal, applications in a background, in a state where the mobile terminal is in the power saving mode ;
controlling, via the controller (180), the background applications to be in either a background activated state or a background deactivated state, in response to a preset type of touch input applied by a user of the mobile terminal onto the graphic objects of the applications; wherein,
when one of the applications is in the background deactivated state, upon reception of a request generated from said application for execution of a function related to said application, not executing, via the controller (180), the function related to said application; and
when one of the applications is in the background activated state, upon reception of the request generated from said application for execution of the function related to said application, executing, via the controller (180), the function related to said application,
**characterized in that**, in the power saving mode, the method further comprises:
executing a specific background application in a foreground upon reception of a request for executing said application from the user,
detecting a present current consumption amount of the specific foreground application, when the present current consumption amount is more than a preset current amount, wherein the preset current amount is set based on a present remaining amount of a battery of the mobile terminal,
displaying a pop-up window on the display unit (151) of the mobile terminal inquiring the user of the mobile terminal about whether to set the remaining background applications to be in the background deactivated state, and
setting the remaining background applications in the background deactivated state in response to a corresponding touch input from the user to the inquiry.

## Patentansprüche

1. Mobiles Endgerät, das aufweist:
eine Anzeigeeinheit (151), und
eine Steuerung (180), die konfiguriert ist, um:
das mobile Endgerät in eine Energiespeicherbetriebsart zu versetzen, die fähig ist, die Ausführung von Anwendungen, die in dem mobilen Endgerät installiert sind, auf einem Hintergrund steuern,
in der Energiesparbetriebsart eine Startbildschirmseite, die graphische Objekte enthält, die den Anwendungen entsprechen, auf der Anzeigeeinheit (151) anzuzeigen, und
die Hintergrundanwendungen derart zu steuern, dass sie ansprechend auf eine vorgegebene Art von Berührungseingabe, die von einem Benutzer des mobilen Endgeräts auf die graphischen Objekte der Anwendungen angewendet wird, entweder in einem Hintergrund-aktivierten Zustand oder einem Hintergrund-deaktivierten Zustand sind, wobei
wenn eine der Anwendungen in dem Hintergrund-deaktivierten Zustand ist, nach dem Empfang einer von der Anwendung erzeugten Anforderung zur Ausführung einer Funktion in Bezug auf die Anwendung die Funktion in Bezug auf die Anwendung nicht ausgeführt wird,
wenn eine der Anwendungen in dem Hintergrund-aktivierten Zustand ist, nach dem Empfang der von der Anwendung erzeugten Anforderung zur Ausführung der Funktion in Bezug auf die Anwendung die Funktion in Bezug auf die Anwendung ausgeführt wird,
**dadurch gekennzeichnet, dass** die Steuerung in der Energiesparbetriebsart ferner konfiguriert ist, um:
nach Empfang einer Anforderung für die Ausführung der Anwendung von dem Benutzer eine spezifische Hintergrundanwendung in einem Vordergrund auszuführen,
eine vorgegebene Stromverbrauchsmenge der spezifischen Vordergrundanwendung zu erfassen, und
wenn die vorgegebene Stromverbrauchsmenge höher als eine vorgegebene Strommenge ist, wobei die vorgegebene Strommenge basierend auf einer vorgegebenen Restmenge einer Batterie des mobilen Endgeräts festgelegt wird:
ein Popup-Fenster auf der Anzeigeeinheit (151) des mobilen Endgeräts anzuzeigen, welches den Benutzer des mobilen Endgeräts abfragt, ob die restlichen Hintergrundanwendungen in den Hintergrund-deaktivierten Zustand versetzt werden sollen, und
die restlichen Hintergrundanwendungen ansprechend auf eine entsprechende Berührungseingabe von dem Benutzer zu der Abfrage in den Hintergrund-deaktivierten Zustand zu versetzen.

2. Mobiles Endgerät nach Anspruch 1, wobei die Steuerung (180), wenn die Funktion in Bezug auf eine der Anwendungen nicht ausgeführt wird, ferner konfiguriert ist, um ein Rückkopplungssignal an die Anwendung zu übertragen, das angibt, dass die Anforderung abgelehnt wurde.

3. Mobiles Endgerät nach Anspruch 1, wobei die Steuerung (180) ferner konfiguriert ist, um graphische Objekte auf der Anzeige (151) anzuzeigen, die Anwendungen in dem Hintergrund-aktivierten Zustand entsprechen, so dass sie visuell von graphischen Objekten, die Anwendungen in dem Hintergrund-deaktivierten Zustand entsprechen, unterscheidbar sind.

4. Mobiles Endgerät nach Anspruch 1, wobei die Steuerung (180) ferner konfiguriert ist, um
das mobile Endgerät basierend auf einer Bedingung, die eine Position des mobilen Endgeräts betrifft, in die Energiesparbetriebsart zu versetzen.

5. Mobiles Endgerät nach Anspruch 1, wobei die Steuerung (180) ferner konfiguriert ist, um eine hinzugefügte Startbildschirmseite auf der Anzeigeeinheit (151) anzuzeigen, die nur graphische Objekte, die Anwendungen in dem Hintergrund-aktivierten Zustand entsprechen, enthält.

6. Mobiles Endgerät nach Anspruch 1, wobei die Steuerung (180) ferner konfiguriert ist, um den Hintergrund-aktivierten Zustand einer der Anwendungen basierend auf einer vorgegebenen Art der Berührungseingabe, die auf das graphische Objekt der Anwendung angewendet wird, in den Hintergrund-deaktivierten Zustand zu überführen.

7. Mobiles Endgerät nach Anspruch 1, wobei die Steuerung (180) ferner konfiguriert ist, um den Hintergrund-aktivierten Zustand oder den Hintergrund-deaktivierten Zustand der Anwendungen basierend auf einem Nutzungsmuster der Anwendungen festzulegen.

8. Mobiles Endgerät nach Anspruch 1, wobei die Steuerung (180) ferner konfiguriert ist, um nach dem Abschluss der Ausführung der spezifischen Anwendung in dem Vordergrund den Hintergrund-deaktivierten Zustand der restlichen Anwendungen aufzuheben.

9. Mobiles Endgerät nach Anspruch 1, wobei die Anwendungen in dem Hintergrund-deaktivierten Zustand und dem Hintergrund-aktivierten Zustand in einen Direktzugriffspeicher des mobilen Endgeräts geladen werden.

10. Mobiles Endgerät nach Anspruch 1, wobei die Steuerung (180) ferner konfiguriert ist, um, wenn eine der Anwendungen in dem Hintergrund-deaktivierten Zustand ist und nach Empfang einer Anforderung für die Ausführung der Anwendung in dem Vordergrund, den Hintergrund-deaktivierten Zustand der Anwendung direkt in einen aktivierten Zustand im Vordergrund zu überführen.

11. Mobiles Endgerät nach Anspruch 10, wobei die Steuerung (180) ferner konfiguriert ist, um die Anwendung derart zu steuern, dass sie nur in dem aktivierten Zustand ist, wenn die Anwendung im Vordergrund ausgeführt wird.

12. Mobiles Endgerät nach Anspruch 11, wobei die Steuerung (180) ferner konfiguriert ist, um die Anwendung von dem aktivierten Zustand in den Hintergrund-deaktivierten Zustand zu überführen, wenn die Anwendung in dem aktivierten Zustand beendet wird.

13. Verfahren zur Steuerung eines mobilen Endgeräts, wobei das Verfahren aufweist:
Versetzen des mobilen Endgeräts in eine Energiespeicherbetriebsart, die fähig ist, die Ausführung von Anwendungen, die in dem mobilen Endgerät installiert sind, auf einem Hintergrund steuern,
in der Energiesparbetriebsart, Anzeigen einer Startbildschirmseite, die graphische Objekte enthält, die den Anwendungen entsprechen, auf der Anzeigeeinheit (151) des mobilen Endgeräts,
in einem Zustand, in dem das mobile Endgerät in der Energiesparbetriebsart ist, Ausführen von Anwendungen in einem Hintergrund über die Steuerung (180) des mobilen Endgeräts;
Steuern der Hintergrundanwendungen über die Steuerung (180), so dass sie ansprechend auf eine vorgegebene Art von Berührungseingabe, die von einem Benutzer des mobilen Endgeräts auf die graphischen Objekte der Anwendungen angewendet wird, entweder in einem Hintergrund-aktivierten Zustand oder einem Hintergrund-deaktivierten Zustand sind, wobei
wenn eine der Anwendungen in dem Hintergrund-deaktivierten Zustand ist, nach dem Empfang einer von der Anwendung erzeugten Anforderung zur Ausführung einer Funktion in Bezug auf die Anwendung die Funktion in Bezug auf die Anwendung über die Steuerung (180) nicht ausgeführt wird, und
wenn eine der Anwendungen in dem Hintergrund-aktivierten Zustand ist, nach dem Empfang der von der Anwendung erzeugten Anforderung zur Ausführung der Funktion in Bezug auf die Anwendung die Funktion in Bezug auf die Anwendung über die Steuerung (180) ausgeführt wird;
**dadurch gekennzeichnet, dass** das Verfahren in der Energiesparbetriebsart ferner aufweist:
nach Empfang einer Anforderung für die Ausführung der Anwendung von dem Benutzer Ausführen einer spezifischen Hintergrundanwendung in einem Vordergrund,
Erfassen einer vorgegebenen Stromverbrauchsmenge der spezifischen Vordergrundanwendung,
wenn die vorgegebene Stromverbrauchsmenge höher als eine vorgegebene Strommenge ist, wobei die vorgegebene Strommenge basierend auf einer vorgegebenen Restmenge einer Batterie des mobilen Endgeräts festgelegt wird:
Anzeigen eines Popup-Fensters auf der Anzeigeeinheit (151) des mobilen Endgeräts, welches den Benutzer des mobilen Endgeräts abfragt, ob die restlichen Hintergrundanwendungen in den Hintergrund-deaktivierten Zustand versetzt werden sollen, und
ansprechend auf eine entsprechende Berührungseingabe von dem Benutzer zu der Abfrage Versetzen der restlichen Hintergrundanwendungen in den Hintergrund-deaktivierten Zustand.

## Revendications

1. Terminal mobile, comprenant :
une unité d'affichage (151), et
un dispositif de commande (180) configuré pour :
faire passer le terminal mobile dans un mode d'économie d'énergie qui est capable de commander l'exécution d'applications installées dans le terminal mobile sur un arrière-plan,
afficher une page d'écran d'accueil dans l'unité d'affichage (151) incluant des objets graphiques correspondant aux applications dans le mode d'économie d'énergie, et
commander des applications d'arrière-plan pour qu'elles soient soit dans un état activé en arrière-plan, soit dans un état désactivé en arrière-plan, en réponse à un type prédéfini d'entrée tactile appliquée par un utilisateur du terminal mobile sur les objets graphiques des applications, dans lequel,
lorsqu'une des applications est dans l'état désactivé en arrière-plan, lors de la réception d'une requête générée depuis ladite application pour exécuter une fonction liée à ladite application, ne pas exécuter la fonction liée à ladite application, et
lorsqu'une des applications est dans l'état activé en arrière-plan, lors de la réception de la requête générée depuis ladite application pour exécuter la fonction liée à ladite application, exécuter la fonction liée à ladite application,
**caractérisé en ce que**, dans le mode d'économie d'énergie, le dispositif de commande est en outre configuré pour :
exécuter une application d'arrière-plan spécifique dans un avant-plan lors de la réception d'une requête pour exécuter ladite application provenant de l'utilisateur,
détecter une quantité de consommation de courant actuelle de l'application d'avant-plan spécifique, et
lorsque la quantité de consommation de courant actuelle est supérieure à une consommation de courant prédéfinie, dans lequel la consommation de courant prédéfinie est définie sur la base d'une quantité restante actuelle d'une batterie du terminal mobile,
afficher une fenêtre contextuelle sur l'unité d'affichage (151) du terminal mobile demandant à l'utilisateur du terminal mobile s'il faut définir les applications d'arrière-plan restantes comme étant dans l'état désactivé en arrière-plan, et
définir les applications d'arrière-plan restantes dans l'état désactivé en arrière-plan en réponse à une entrée tactile, provenant de l'utilisateur, correspondant à la demande.

2. Terminal mobile selon la revendication 1, dans lequel, lorsque la fonction liée à une des applications n'est pas exécutée, le dispositif de commande (180) est en outre configuré pour transmettre, à ladite application, un signal de réaction indiquant que la requête a été refusée.

3. Terminal mobile selon la revendication 1, dans lequel le dispositif de commande (180) est en outre configuré pour afficher des objets graphiques sur l'unité d'affichage (151) correspondant à des applications dans l'état activé en arrière-plan pour qu'ils puissent être visuellement différenciés d'objets graphiques correspondant à des applications dans l'état désactivé en arrière-plan.

4. Terminal mobile selon la revendication 1, dans lequel le dispositif de commande (180) est en outre configuré pour :
faire passer le terminal mobile dans le mode d'économie d'énergie sur la base d'une condition liée à une position du terminal mobile.

5. Terminal mobile selon la revendication 1, dans lequel le dispositif de commande (180) est en outre configuré pour afficher une page d'écran d'accueil ajoutée sur l'unité d'affichage (151) incluant uniquement des objets graphiques correspondant à des applications dans l'état activé en arrière-plan.

6. Terminal mobile selon la revendication 1, dans lequel le dispositif de commande (180) est en outre configuré pour convertir l'état activé en arrière-plan d'une des applications en l'état désactivé en arrière-plan, sur la base d'un type prédéfini de toucher appliqué à l'objet graphique de ladite application.

7. Terminal mobile selon la revendication 1, dans lequel le dispositif de commande (180) est en outre configuré pour définir l'état activé en arrière-plan ou l'état désactivé en arrière-plan des applications, sur la base d'un modèle d'utilisation des applications.

8. Terminal mobile selon la revendication 1, dans lequel, lors de l'achèvement de l'exécution de l'application spécifique dans l'avant-plan, le dispositif de commande (180) est en outre configuré pour faire sortir les applications restantes de l'état désactivé en arrière-plan.

9. Terminal mobile selon la revendication 1, dans lequel les applications sont chargées dans une mémoire vive du terminal mobile dans l'état désactivé en arrière-plan et dans l'état activé en arrière-plan.

10. Terminal mobile selon la revendication 1, dans lequel lorsqu'une des applications est dans l'état désactivé en arrière-plan, et lors de la réception d'une requête pour exécuter ladite application dans l'avant-plan, le dispositif de commande (180) est en outre configuré pour convertir directement l'état désactivé en arrière-plan de ladite application vers un état activé dans l'avant-plan.

11. Terminal mobile selon la revendication 10, dans lequel le dispositif de commande (180) est en outre configuré pour commander ladite application pour qu'elle soit dans l'état activé uniquement lorsque l'application est exécutée dans l'avant-plan.

12. Terminal mobile selon la revendication 11, dans lequel lorsque ladite application est achevée dans l'état activé, le dispositif de commande (180) est en outre configuré pour commander ladite application pour qu'elle soit dans l'état désactivé en arrière-plan depuis l'état activé.

13. Procédé de commande d'un terminal mobile, le procédé comprenant :
le passage du terminal mobile dans un mode d'économie d'énergie qui est capable de commander une exécution d'applications installées dans le terminal mobile sur un arrière-plan ;
l'affichage, via une unité d'affichage (151) du terminal mobile, d'une page d'écran d'accueil incluant des objets graphiques correspondant aux applications dans le mode d'économie d'énergie,
l'exécution, via un dispositif de commande (180) du terminal mobile, d'applications dans un arrière-plan, dans un état dans lequel le terminal mobile est dans le mode d'économie d'énergie ;
la commande, via le dispositif de commande (180), des applications d'arrière-plan pour qu'elles soient soit dans un état activé en arrière-plan, soit dans un état désactivé en arrière-plan, en réponse à un type prédéfini d'entrée tactile appliquée par un utilisateur du terminal mobile sur les objets graphiques des applications ; dans lequel,
lorsqu'une des applications est dans l'état désactivé en arrière-plan, lors de la réception d'une requête générée depuis ladite application pour exécuter une fonction liée à ladite application, la non-exécution, via le dispositif de commande (180), de la fonction liée à ladite application ; et
lorsqu'une des applications est dans l'état activé en arrière-plan, lors de la réception de la requête générée depuis ladite application pour exécuter la fonction liée à ladite application, l'exécution, via le dispositif de commande (180), de la fonction liée à ladite application,
**caractérisé en ce que**, dans le mode d'économie d'énergie, le procédé comprend en outre :
l'exécution d'une application d'arrière-plan spécifique dans un avant-plan lors de la réception d'une requête pour exécuter ladite application provenant de l'utilisateur,
la détection d'une quantité de consommation de courant actuelle de l'application d'avant-plan spécifique,
lorsque la quantité de consommation de courant actuelle est supérieure à une consommation de courant prédéfinie, dans lequel la consommation de courant prédéfinie est définie sur la base d'une quantité restante actuelle d'une batterie du terminal mobile,
l'affichage d'une fenêtre contextuelle sur l'unité d'affichage (151) du terminal mobile demandant à l'utilisateur du terminal mobile s'il faut définir les applications d'arrière-plan restantes comme étant dans l'état désactivé en arrière-plan, et
la définition des applications d'arrière-plan restantes dans l'état désactivé en arrière-plan en réponse à une entrée tactile, provenant de l'utilisateur, correspondant à la demande.
